(19) Europäisches Patentamt
European Patent Office
Office européen des brevets

(11) **EP 4 100 167 B1**

(12) **EUROPEAN PATENT SPECIFICATION**

(45) Date of publication and mention
of the grant of the patent:
**17.04.2024 Bulletin 2024/16**

(21) Application number: **21710645.9**

(22) Date of filing: **04.02.2021**

(51) International Patent Classification (IPC):
*F16F 15/34* (2006.01)     *B04B 7/14* (2006.01)
*B04B 9/14* (2006.01)     *B04B 7/08* (2006.01)
*B04B 5/04* (2006.01)

(52) Cooperative Patent Classification (CPC):
**B04B 9/14; B04B 5/0414; B04B 7/085;
B04B 9/146; F16F 15/34**

(86) International application number:
**PCT/US2021/016557**

(87) International publication number:
**WO 2021/158749 (12.08.2021 Gazette 2021/32)**

(54) **SYSTEM AND METHOD FOR BALANCING A CENTRIFUGE ROTOR**

**SYSTEM UND VERFAHREN ZUM AUSWUCHTEN EINES ZENTRIFUGENROTORS**

**SYSTÈME ET PROCÉDÉ D'ÉQUILIBRAGE D'UN ROTOR CENTRIFUGE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.02.2020 US 202062969932 P
10.11.2020 US 202063112018 P**

(43) Date of publication of application:
**14.12.2022 Bulletin 2022/50**

(60) Divisional application:
**24157915.0 / 4 344 788**

(73) Proprietor: **Fiberlite Centrifuge, LLC
Santa Clara, CA 95054 (US)**

(72) Inventor: **PIRAMOON, Sina
San Jose, CA 95118 (US)**

(74) Representative: **Ziermann, Oliver
Life Technologies GmbH
Frankfurter Straße 129b
64293 Darmstadt (DE)**

(56) References cited:
**US-A- 989 043     US-A1- 2020 001 505
US-B2- 8 147 392**

**Description**

## FIELD OF THE INVENTION

This invention relates generally to centrifuge rotors and, more particularly, to balancing a rotor for use with a centrifuge.

## BACKGROUND OF THE INVENTION

Rotors are commonly used in laboratory centrifuges to hold samples during centrifugation. While rotors may vary significantly in construction and in size, one common rotor structure is a fixed angle rotor having a solid rotor body with a plurality of cavities distributed radially within the rotor body and arranged symmetrically about an axis of rotation. In this type of rotor, samples are placed in the cavities, allowing a plurality of samples to be subjected to centrifugation.

Conventional fixed angle rotors may be made from metal or various other materials. However, rotors may also be constructed using a compression molding and filament winding process wherein the rotor is fabricated from a suitable material such as composite carbon fiber. For example, a fixed angle rotor may be compression molded from layers of resin-coated carbon fiber laminate material. Examples of composite rotors are described in U.S. Patent Nos. 8,147,392, 8,273,202, 8,323,169, and 10,086,387. A centrifugal field-flow fractionation device is described in US 2020/001505 A1. A means for balancing centrifugal bowls is described in US 989 043 A.

Centrifuges may feature a rigid rotor shaft or spindle that imparts a rotational torque to a rotor mounted on the spindle within the centrifuge. However, for high speed centrifuges, such as ultracentrifuges which may rotate the rotor at rotational speeds of 50,000 revolutions-per-minute (RPM) or greater, a flexible shaft is typically used in place of a rigid shaft. The flexible shaft limits the transmission of vibrations to the framework of the centrifuge generated by any imbalance of the rotor or by a poor distribution of the sample load within the centrifuge.

Rotors used in high speed applications, e.g., at speeds exceeding several tens of thousands of rotations per minute, must be carefully balanced so as to reduce the tendency of the rotor to cause vibrations during high speed rotation. Variances in the mass of the rotor load can result in an undesirable force imbalance when the rotor is operated at high speed. This force imbalance strains the spindle, and may result in damage to the centrifuge, poor efficiency, excess wear, and unwanted noise. Conventional balancing techniques for rotors operating with rigid spindles use a combination of samples and balance tubes all having the same weight, or other various balancing patterns without the addition of balance tubes.

A diagnostic device or balancing machine, such as that sold commercially by American Hofmann Corporation of Lynchburg, Virginia, or by Schenck Corporation of Deer Park, New York, may be used to detect rotor imbalances in rotors commonly mounted on rigid spindles, and may also be used to identify specific locations on a rotor body where additional weight is needed to balance the rotor. Holes are then manually drilled into the rotor body at the identified locations, and weights press fit into the holes in accordance with the information provided by the diagnostic device. The weights may be cylindrical bodies of metal, for example, each having a particular mass to compensate for the imbalance detected by the diagnostic device.

A rotor may need to be re-balanced multiple times throughout its life. For example, as the rotor ages and wears, the mass distribution of the rotor may change such that re-balancing of the rotor is required. When this occurs, the previously installed weights must typically be removed from the previously drilled holes. New holes are then drilled into the rotor body and weights press fitted into the new holes. Thus, the previously drilled holes are rendered obsolete. It is often desirable to plug the previously drilled holes for structural or aesthetic purposes, which requires repair of the rotor body. The cycle of drilling new holes into the rotor body and repairing the rotor body to plug previously drilled holes repeats every time the rotor is re-balanced.

Therefore, it would be desirable to provide improved systems and methods for balancing rotors which address these and other problems associated with conventional rotors, especially for rotors used in high speed centrifuges such as ultracentrifuges.

## SUMMARY

In an embodiment of the present invention, a rotor is provided. The rotor includes a rotor body having an axis of rotation, and a plurality of balancing apertures arranged circumferentially around the axis of rotation. Each of the balancing apertures is configured to selectively receive a weight.

In one embodiment the present invention comprises the combined features of claim 1.

In another aspect of the present invention, the lid includes a top surface and a bottom surface opposite the top surface, and the balancing apertures are formed in one of the top surface or the bottom surface.

In another aspect of the present invention, at least one weight may be received by at least one of the balancing apertures.

In another aspect of the invention, the at least one weight may be a screw including a threaded outer surface, and each of the balancing apertures may include a threaded inner surface configured to threadedly engage the weight.

In another aspect of the present invention, each balancing aperture may be the same radial distance from the axis of rotation as the other balancing apertures.

In another aspect of the present invention, each balancing aperture may be spaced the same angular distance from each of the angularly adjacent balancing apertures.

In another aspect of the present invention, the balancing apertures may be coplanar.

In another embodiment the present invention comprises the combined features of claim 8.

In another aspect of the present invention, the rotor body may include an elongated bore extending along the axis of rotation between the upper surface of the rotor body and the lower surface of the rotor body, and the rotor may further include a drive hub, a lid screw, a lid, and an elastic member. The drive hub may be mounted within the elongated bore and include a cylindrical shaft that projects upwardly through the elongated bore and an upper portion having a threaded outer surface. The lid screw may include a lower bore having a threaded inner surface configured to threadedly engage the threaded outer surface of the drive hub, and a lid screw flange that extends radially outward from a lower end of the lid screw. The lid may include a wall portion extending radially outward and having a lower surface with a third annular groove. The elastic member may be positioned within the third annular groove, and be compressed against the balance ring upper surface in response to threaded engagement of the lid screw with the drive hub.

In another aspect of the present invention, the first annular groove may include a shoulder, and the balance ring may include a balance ring flange that projects radially inward to engage the shoulder.

In another aspect of the present invention, the rotor body may include a circumferential sidewall, and the rotor may further include a reinforcement that extends around the circumferential sidewall.

In another aspect of the present invention, the reinforcement may extend around and above the circumferential sidewall of the rotor body to define a channel with the first annular groove, and the balance ring may be positioned in the channel.

In another aspect of the present invention, the circumferential sidewall may include a circumferential recess, and the reinforcement may conform to the circumferential recess.

In another aspect of the present invention, the balance ring may be operatively coupled to the first annular groove by an adhesive, a shrink-fit, or both the adhesive and the shrink-fit.

In another aspect of the present invention, the rotor body may be constructed of a polymer composite, a carbon fiber material, or both the polymer composite and the carbon fiber material.

In another embodiment a method for balancing the rotor including the plurality of apertures each configured to selectively receive a weight is provided. The method includes detecting an imbalance in the rotor while rotating the rotor in a centrifuge, and, in response to detecting the imbalance, selectively installing a balancing weight in a selected balancing aperture.

In an aspect of the present invention, detecting the imbalance may include identifying a critical speed of the rotor, and determining the imbalance in the rotor at a test speed that is less than the critical speed.

In another aspect of the present invention, the critical speed may be one of a plurality of critical speeds, and the imbalance of the rotor may be determined for each of a plurality of test speeds, with each test speed being a fraction of a respective critical speed of the plurality of critical speeds.

In another aspect of the present invention, identifying the critical speed may include, for each of a plurality of rotational speeds, spinning the rotor at the rotational speed, applying an external force to the rotor while the rotor is spinning at the rotational speed, measuring and recording a vibrational response of the rotor to the external force, and determining an eigenfrequency for the rotor based on the vibrational response. The method may then identify one or more critical speeds of the rotor based on the eigenfrequencies.

In another aspect of the present invention, selectively installing the balancing weight in the selected balancing aperture may include measuring the imbalance of the rotor at a first test speed, installing a trial weight in a balancing aperture at a reference position, and measuring the imbalance of the rotor at the first test speed with the trial weight installed at the reference position. The method may then include repeatedly moving the trial weight to a next balancing aperture a predetermined angular distance from a current balancing aperture, and measuring the imbalance of the rotor at the first test speed until the next balancing aperture would be at or beyond the reference position. Based on the measured imbalances, the method may then determine first target location and a first target mass to be added at the first target location for balancing the rotor.

In another aspect method may further include determining a first balance vector provided by the first target mass at the first target location, selecting a first balancing aperture on one side of the first target location and a second balancing aperture on the other side of the first target location, and determining a first balancing mass and a second balancing mass that, when placed in the first balancing aperture and the second balancing aperture, respectively, provide a second balance vector equivalent to the first balance vector.

In another aspect the method may further include installing a first weight having the first balancing mass in the first balancing aperture, installing a second weight having the second balancing mass in the second balancing aperture, and measuring the imbalance at the first test speed with the first weight installed in the first balancing aperture and the second weight installed in the second balancing aperture.

In another aspect the method may further include measuring the imbalance of the rotor at a second test speed higher than the first test speed, installing the trial weight in the balancing aperture at the reference position, and measuring the imbalance of the rotor at the second test speed with the trial weight installed at the reference position. The method may further include repeatedly moving the trial weight to the next balancing aperture the predetermined angular distance from the current balancing aperture and measuring the imbalance of the rotor at the second test speed until the next balancing aperture would be at or beyond the reference position. Based on the measured imbalances, the method may then determine a second target location and a second target mass to be added at the second target location for balancing the rotor.

In another aspect the method may further include determining a second balance vector for a combination of the first target mass at the first target location and the second target mass at the second target location, and determining a third target mass and a third target location that provides a third balance vector equivalent to the second balance vector.

In another aspect the method may further include selecting a third balancing aperture on one side of the third target location and a fourth balancing aperture on the other side of the third target location, and determining a third balancing mass and a fourth balancing mass that, when placed in the third balancing aperture and the fourth balancing aperture, respectively, provide a fourth balance vector equivalent to the third balance vector.

In another aspect the method may further include installing a third weight having the third balancing mass in the third balancing aperture, installing a fourth weight having the fourth balancing mass in the fourth balancing aperture, measuring the imbalance at the second test speed with the third weight installed in the third balancing aperture and the fourth weight installed in the fourth balancing aperture, and comparing the imbalance measured at the second test speed with the imbalance measured at the first test speed.

The above summary presents a simplified overview of some embodiments of the present invention to provide a basic understanding of certain aspects thereof that are discussed herein. The summary is not intended to provide an extensive overview of the present invention, nor is it intended to identify any key or critical elements, or delineate the scope of the present invention. The sole purpose of the summary is merely to present some concepts in a simplified form as an introduction to the detailed description presented below.

## BRIEF DESCRIPTION OF THE DRAWINGS

The accompanying drawings, which are incorporated in and constitute a part of this specification, illustrate embodiments of the invention and, together with a general description of the invention given above, and the detailed description given below, serve to explain the invention.

Fig. 1 is a perspective view of a centrifuge including a rotor having a lid in accordance with an exemplary embodiment of the present invention.
Fig. 2 is a perspective view of the rotor of Fig. 1.
Fig. 3 is an exploded perspective view of the rotor of Fig. 2.
Figs. 4-4D are bottom perspective views of the lid of Figs. 1-3 showing various weights installed in various balancing apertures of the lid.
Fig. 5 is a cross-sectional view of the rotor of Fig. 2.
Fig. 6 is a detailed view of a portion of the rotor of Fig. 5 showing a balancing weight installed in the bottom surface of the lid.
Fig. 7 is a perspective view of an alternative embodiment of the lid of Fig. 4, showing a plurality of balancing apertures in the top surface of the lid.
Fig. 8 is a detailed view of a portion of the rotor of Fig. 7, showing a balancing weight installed in the top surface of the lid.
Fig. 9 is flowchart illustrating an exemplary process that may be performed to balance a rotor in accordance with an embodiment of the present invention.
Fig. 9A-9C are flowcharts illustrating exemplary subprocesses that may be implemented by the process of Fig. 9.
Fig. 10 is a perspective view of a rotor in accordance with another exemplary embodiment of the present invention.
Fig. 11 is an exploded perspective view of the rotor of Fig. 10 showing a rotor body, a balance ring, a drive hub, and a lid of the rotor.
Fig. 12 is a perspective view showing additional details of the lid of FIG. 11.
Fig. 13 is a top perspective view showing additional details of the rotor body of Fig. 11.
Fig. 14 is a bottom perspective view showing additional details of the rotor body and drive hub of Fig. 11.
Fig. 15 is a cross-sectional view of the rotor of Fig. 10.

Fig. 16 is an exploded cross-sectional view of a portion of the rotor of Fig. 15 showing additional details of the lid, balance ring, and rotor body.

Figs. 17 and 18 are top views of the rotor of Fig. 10 with the lid removed.

Fig. 19 is a graphical view illustrating vibrational data for a modally balanced rotor in accordance with an embodiment of the present invention.

Fig. 20 is a perspective view of the rotor used to generate the data of Fig. 19.

Figs. 21-24 are graphical views illustrating vibrational data for an unbalance rotor, a conventionally balanced rotor, and a modally balanced rotor.

FIG. 25 is a diagrammatic view of a computer that may be used to implement one or more processes in accordance with embodiments of the invention.

## DETAILED DESCRIPTION OF THE INVENTION

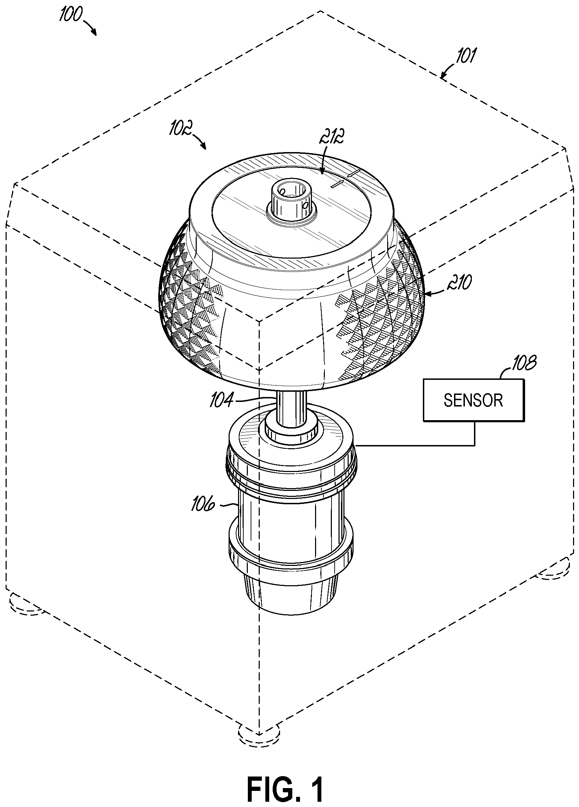

Figs. 1 through 6 depict an exemplary lid 212 for a rotor 102 (e.g., an $8 \times 100$ mL capacity fixed-angled rotor) according to an embodiment of the present invention. The lid 212 includes a plurality of balancing apertures 432 each configured to selectively receive a trial weight 433 or balancing weight 436 that may be removably engaged with the lid 212. As described in greater detail below, the balancing weight 436 may be selectively positioned in a variety of predetermined locations on the lid 212 for balancing the rotor 102 according to a modal balancing method.

Fig. 1 depicts an exemplary centrifuge 100 according to an embodiment of the present invention. The centrifuge 100 includes a housing 101, a drive motor 106, a rotor drive shaft or spindle 104, and a rotor 102 mounted on the spindle 104. In operation, the drive motor 106 imparts rotation to the spindle 104 that, in turn, provides a rotational torque to the rotor 102 to rotate the rotor 102 at a desired speed.

Depending on the type of centrifuge 100 being used, such as a centrifuge operating at a maximum speed of up to 15,000 RPM, over 15,000 RPM up to 40,000 RPM, over 40,000 RPM up to 90,000 RPM, or over 90,000 RPM, the spindle 104 can either be rigid or flexible. Rigid spindles 104 may be used for lower speed centrifuges 100. However, for those centrifuges 100 that operate at high speeds, e.g., 50,000 RPM or more, flexible spindles 104 may be used to reduce the transmission of vibrations during centrifugation. A sensor 108, such as an accelerometer, may be operatively coupled to the centrifuge 100 or a component thereof, and configured to measure vibration. The sensor 108 may be attached, for example, to the motor 106 at the bearing supporting the rotating spindle 104. The sensor 108 may be placed as close to the bearing as possible, and may be preferably located in the same plane as the bearing in order to obtain accurate measurements of vibration signals at the bearing during rotation of the rotor 102.

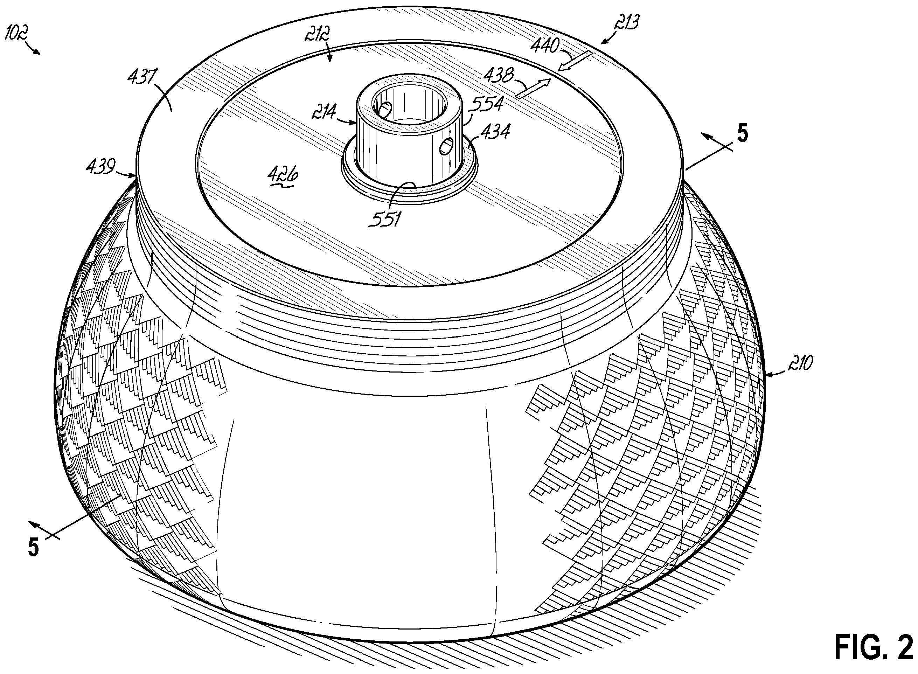

Figs. 2, 3, and 5 depict an exemplary rotor 102 according to an embodiment of the present invention. The rotor 102 includes a rotor body 210 and a rotor hub 322. The rotor hub 322 is configured to transfer torque from the spindle 104 to the rotor body 210. The rotor hub 322 may be constructed of a metallic material, such as titanium, and includes a head portion 548 and an elongated shaft portion 546 extending axially upward from the head portion 548. The shaft portion 546 includes a threaded outer surface 550, a threaded inner surface 552, and an inwardly facing circumferential surface 544. The inwardly facing circumferential surface 544 may be tapered radially inward and downward along a partial length of the rotor hub 322. The rotor hub 322 may be secured to the rotor body 210 by a hub retainer 320 that is operatively coupled with the threaded outer surface 550 of the shaft portion 546 of rotor hub 322. The hub retainer 320 may be screwed onto the threaded end of the shaft portion 546 after the rotor hub 322 is inserted through the rotor body 210.

The rotor 102 also includes an exemplary lid 212 that is removably coupled to the rotor hub 322 so as to overlie the rotor body 210. The lid 212 is generally disc-shaped and includes a central bore 551, and an annular peripheral groove 429 for receiving an O-ring 430. The O-ring 430 may provide a fluid-tight seal between the lid 212 and the rotor body 210 when the lid 212 is removably coupled to the rotor body 210. The lid 212 may be constructed of a carbon fiber material, a metallic material, or any other suitable material. For example, the lid 212 may be compression molded from layers of resin-coated carbon fiber laminate material. The rotor body 210 and lid 212 may also include respective indicators (e.g., arrows 438, 440) that indicate a specified reference location 213. The reference location 213 may specify a particular location on the rotor body 210 and lid 212 such that the lid 212 can be lined up at the same reference location 213 with respect to the rotor body 210. The reference location 213 may be identified with a marking or indicator on both the rotor body 210 and the lid 212. Although reference arrows are depicted in Fig. 2, it should be understood that the reference location 213 can be identified on the rotor body 210 and lid 212 by any suitable means that would indicate to a user where to line up the rotor body 210 and lid 212.

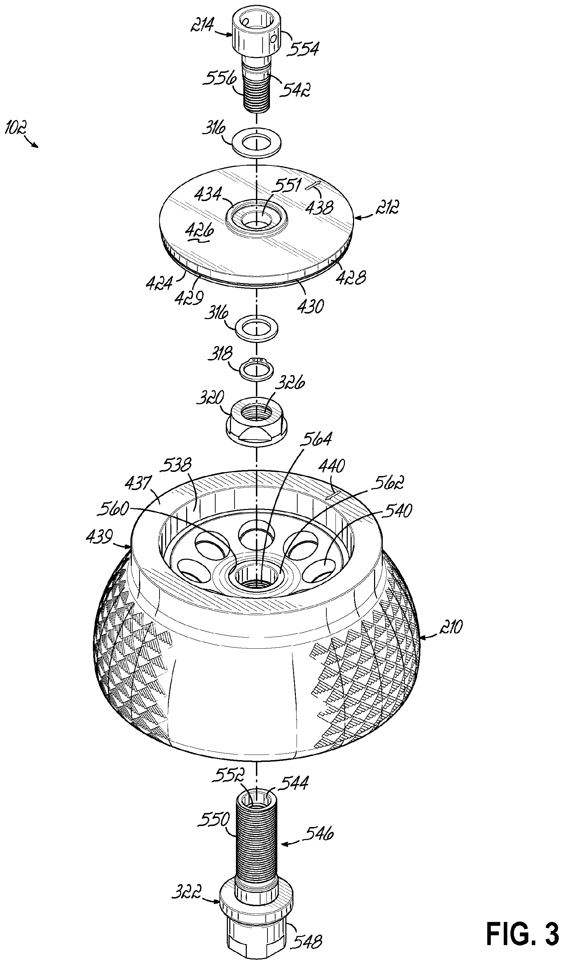

As shown in Figs. 3, 5, 6, and 8, the lid 212 may be removably coupled to the rotor body 210 by a lid screw 214. The exemplary lid screw 214 includes an upper flange 554, a threaded lower outer surface 556, and a multi-stage bore 558 extending axially through the lid screw 214. The lid screw 214 may include an outwardly facing circumferential surface 542 that is tapered radially inward and downward along a partial length of the lid screw 214. The circumferential surface 542 may thereby be configured to confront the inwardly facing circumferential surface 544 of the rotor hub 322 when the lid screw 214 is engaged with the rotor body 210. As shown, the threaded lower outer surface 556 may be received by and threadably engage the threaded inner surface 552 of the hub 322 such that the upper flange 554 presses a washer 316 against the lid 212. A retention clip 318 may hold the lid screw 214, washers 316, and lid 212 together by sandwiching the lid 212 between the two washers 316. When coupled to the rotor body 210 via engagement of the lid screw 214 with the hub 322 and the retention clip 318 with the lid 212, the lid 212 may overlie a plurality of tubular cavities 540 and the sample containers contained therein. The lid 212 may thereby block access to the sample containers held in the cavities 540, such as during high speed rotation. Each of the rotor mounting components described above may be made of any suitable metallic or non-metallic material.

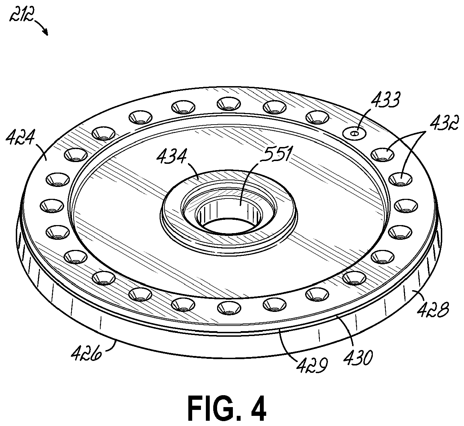

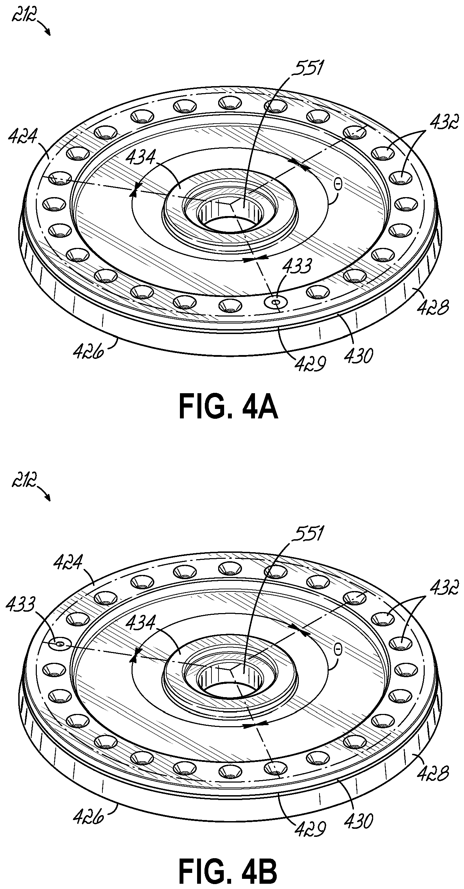

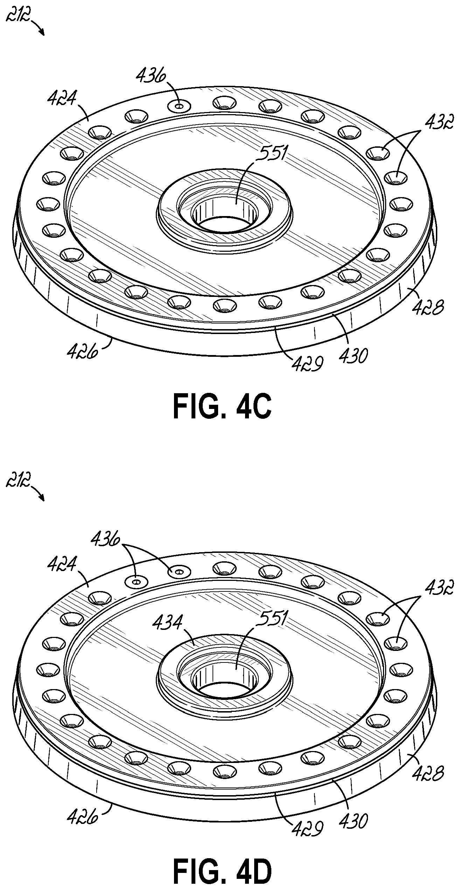

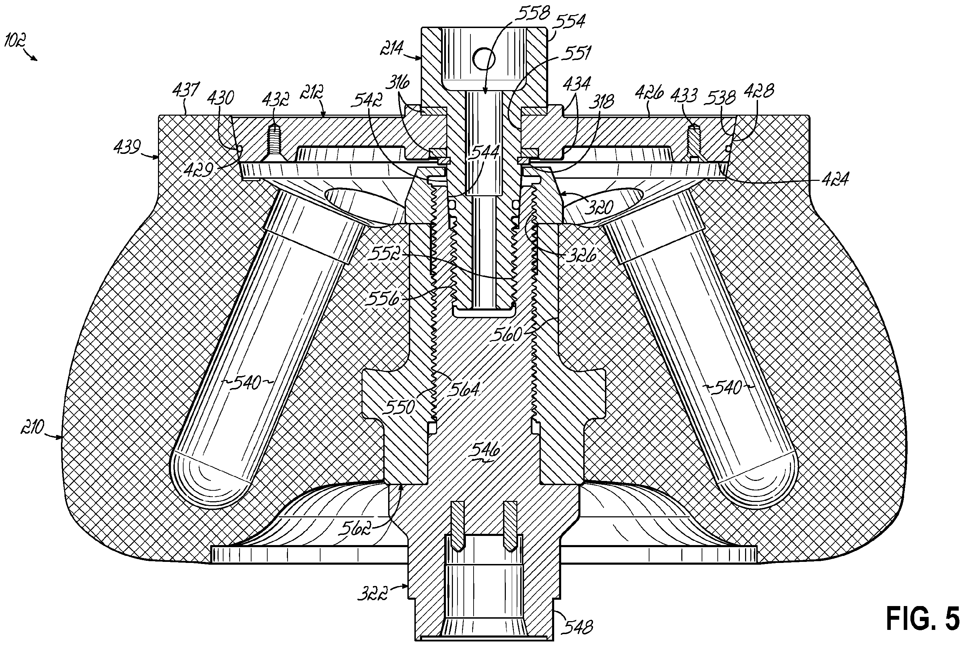

Fig. 4 depicts an exemplary lid 212 with a trial weight 433 installed according an embodiment of the present invention. The lid 212 may be supported by the rotor body 210 and configured to overlie the top of the rotor body 210, as best shown in Fig. 5. The lid 212 includes a top surface 426, a bottom surface 424 opposite the top surface 426, and an outwardly facing circumferential sidewall 428 that extends between the top surface 426 and the bottom surface 424. The circumferential sidewall 428 is tapered radially inward and downward from proximate the top surface 426 of the lid 212. The circumferential sidewall 428 may be tapered at a taper angle in a range of about 10° to 30° relative to the top surface 426 of the lid 212. Preferably, the circumferential sidewall 428 may be tapered at a taper angle of about 10° relative to the top surface 426 of the lid 212. The lid 212 may also include an O-ring 430 that is supported by the circumferential sidewall 428 of the lid 212. The lid 212 may also include an annular ridge 434 extending from the top and bottom surfaces 426, 424 of lid 212 to define cavities configured to accommodate washers 316.

The lid 212 may further include a plurality of balancing apertures 432 circumferentially spaced apart from each other on the lid 212. Each balancing aperture 432 may include a threaded inner surface and be of a uniform configuration. That is, each of the balancing apertures 432 may has the same depth, cross-dimension, or thread pitch, for example. Thus, each of the balancing apertures 432 may be configured to threadably receive the same type of balancing weights 436 or trial weights 433. The balancing apertures 432 may be located on the bottom surface 424, the top surface 426, or both surfaces 424, 426 of lid 212.

The exemplary embodiment best shown in Fig. 4 includes twenty-four balancing apertures 432 on the bottom surface 424 of the lid 212. The balancing apertures 432 are circumferentially spaced apart from each other at equal circumferential spacings about the central bore 551. Thus, the balancing apertures 432 define predetermined locations on the lid 212 for receiving balancing weights 436 or trial weights 433. However, any suitable number of balancing apertures 432 may be used at any suitable spacing. Thus, the cross dimension of the lid 212 may affect the available surface area for balancing apertures 432, and may be increased to provide additional surface area for accommodating a greater number of balancing apertures 432. It should be understood that the number of balancing apertures 432 may correlate to the number of options for installing balancing weights 436 or trial weights 433. The number of balancing apertures 432 may therefore correlate to a degree of control of the center of gravity of the lid 212, which may affect the stability of the rotor 102. Fig. 4 depicts a single trial weight 433 installed in a balancing aperture 432 referred to as the reference location 213. It should be further understood that the number of balancing weights 436 installed in the lid 212 may vary depending on the amount of imbalance of the rotor 102 to be corrected.

An imbalance may occur any time the center of gravity of the rotor 102 is not coincident with the axis of rotation. The force generated by the imbalance can be characterized by:

$$F_{imb} = M \times \varepsilon \times \omega^2$$

where $M$ is the mass of the rotor, $\varepsilon$ is the radial offset of the center of gravity from the axis of rotation (or "eccentricity") of the rotor, ($M \times \varepsilon$) is the imbalance, $F_{imb}$ is the force caused by the imbalance, and $\omega$ is the speed of rotation in rad/sec. The speed of rotation $\omega$ is given by:

$$\omega = \frac{2\pi N}{60}$$

where N = the speed of rotation in RPM. The imbalance vector $\vec{U} = M \times \vec{\varepsilon}$ is directed outwardly from the axis of rotation through the center of gravity, and therefore rotates about the axis of rotation synchronously with the rotor 102. Thus, the rotor 102 can be balanced by adding an amount of mass to the rotor in one or more positions that generate a balance vector $\vec{B} = -\vec{U}$. That is, to fully balance the rotor 102, the balance vector should be equal in magnitude to, and opposite in phase from, the imbalance vector.

In the embodiment depicted by Figs. 4-4D, it should be understood that the reference location 213 may correspond to the reference location 213 described in Figs. 1-3, but on the direct opposite side (bottom surface 424) of the lid 212. Figs. 4A and 4B depict bottom perspective views of the lid 212 of Fig. 3. Fig. 4A depicts a trial weight 433 installed in a balancing aperture 432 located 120 degrees (θ) from the reference location 213 of the trial weight 433 installed in Fig. 4. Fig. 4B depicts a trial weight 433 installed in a balancing aperture 432 located 240 degrees (2θ) in the clockwise direction from the location of the trial weight 433 installed in Fig. 4, or 120 degrees (θ) in the clockwise direction from the reference location 213 of the trial weight 433 installed in Fig. 4A.

Figs. 4C and 4D each depict a bottom perspective view of the lid 212 of Fig. 3. Fig 4C shows one balancing weight 436 installed in a balancing aperture 432, and Fig. 4D shows two balancing weights 436 installed in adjacent balancing apertures 432. The number of balancing weights 436 installed in the balancing apertures 432 of lid 212 may depend on the amount of imbalance of the rotor 102. The number of balancing weights 436 installed may vary from as few as none to as many as the number of balancing apertures 432 present on the lid 212.

Each balancing or trial weight may comprise a set screw including a threaded outer surface, a proximal end, and a distal end. The distance between the proximal and distal ends of the set screw may define the length of the weight. A hex socket or other suitable keyed bore may be provided in the proximal end for receiving a tool, such as an Allen wrench, to assist in advancing the weight into or out of one of the balancing apertures 432. The threaded outer surface of the weight may allow the weight to be inserted into or removed from any of the balancing apertures 432 without causing damage to the lid 212. While the weights 433, 436 and balancing apertures 432 are depicted herein as threaded so that the weight may be removably engaged with one or more of the balancing apertures 432, embodiments of the invention are not so limited. Thus, weights 433, 436 may be removably engaged with lid 212 by any suitable means. In some embodiments, a plurality of balancing weights 436 may be supplied having various different lengths or masses so that balancing weights 436 with different balancing characteristics can be selectively positioned in particular balancing apertures 432 to achieve a customized balancing. It should be understood that other suitable devices, such as press-fit dowel pins, for example, may be also be employed. Embodiments of the present invention are therefore not limited to the exemplary trial and balancing weights depicted.

While the balancing weights 436, trial weights 433, and corresponding balancing apertures 432 have been described with respect to the illustrated lid 212 and rotor 102, the balancing weights 436, trial weights 433, and balancing apertures 432 may be incorporated into any suitable lid. In an alternative embodiment, balancing apertures 432 may be included in the rotor body 210, such as in the top annular surface 437 of the annular rim 439 of rotor body 210. The balancing weights 436, trial weights 433, and balancing apertures 432 may also be incorporated in other carbon fiber rotors of various designs, or in rotors constructed of different materials.

Fig. 5 depicts a side cross-sectional view of a rotor 102 according an embodiment of the present invention. The rotor 102 includes a rotor body 210 that is symmetrical about an axis of rotation defined by the rotor hub 322. Samples contained in sample containers (not shown) may be positioned in the rotor body 210 about the axis of rotation and centrifugally rotated. The illustrated rotor body 210 includes a central bore 560 for receiving a rotor insert 562 that may be co-molded with the rotor body 210. The rotor insert 562 includes a threaded central bore 564 configured to operatively engage at least the threaded shaft portion 550 of hub 322 to securely seat the rotor body 210 on the hub 322.

The rotor body 210 may include a plurality of cavities 540. In an embodiment of the invention, the plurality of cavities 540 may comprise a plurality of circumferentially spaced tubular cavities, each tubular cavity having an open end configured to receive a sample container. Each of the plurality of cavities 540 may extend into the rotor body 210 from the upper cavity, and may be suitably sized and shaped to receive at least one of the sample containers for centrifugal rotation about the axis of rotation. Although the exemplary rotor 102 depicted in Figs. 1-3, 5, 6, and 8 has 8 cavities 540 each sized to accept a 100 mL sample container, it should be understood that any suitable number of cavities 540 may be used, and that the cavities 540 may be configured to fit sample containers of various sizes. As used herein, the term "tubular" may refer to any suitable cross-sectional shape, including for example, but not limited to, rounded shapes (e.g., oval, circular or conical), quadrilateral shapes, regular polygonal or irregular polygonal shapes, or any other suitable shape. Accordingly, the term "tubular" is not intended to be limited to the generally circular cross-sectional profile of the exemplary cavities 540 illustrated in the figures.

In one embodiment, the rotor body 210 may be constructed of a polymer composite material. For example, the rotor body 210 may be compression molded from layers of resin-coated carbon fiber laminate material. It should be appreciated that the rotor body 210 may also be formed using various other materials and by various other methods. For example, the rotor body 210 may be compression molded from small pieces of discontinuous resin-coated carbon fiber, or from a combination of pieces of discontinuous carbon fiber and stacked layers of carbon laminate.

With the rotor body 210 being operatively engaged with the rotor hub 322, the hub retainer 320 may be removably fastened to the hub 322 to further facilitate holding the rotor body 210, rotor hub 322, and insert 562 in place relative to each other. In this regard, the hub retainer 320 may include an inner threaded bore 326 for receiving and threadably engaging at least the threaded outer surface 550 of the shaft portion 546 of the hub 322.

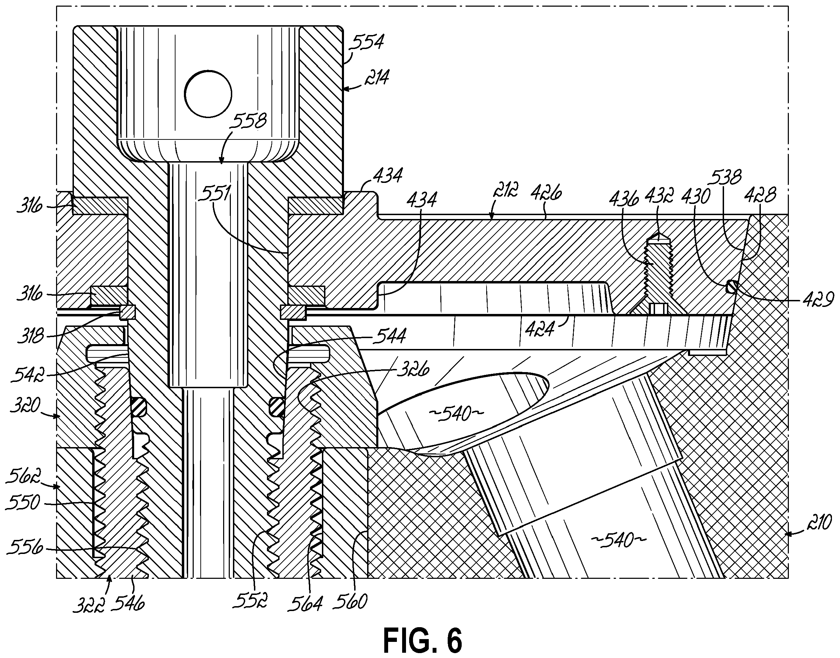

Fig. 6 depicts a detailed view of a portion of the rotor 102 of Fig. 5 illustrating the interface between the lid 212 and the rotor body 210. The lid 212 may include an O-ring 430 seated in the annular peripheral groove 429 in the circumferential sidewall 428 of lid 212. The lid 212 may be configured to fit within an inwardly facing circumferential sidewall 538 of rotor body 210 such that the lid 212 rests against the circumferential sidewall 538. Preferably, the lid 212 may be formed such that, when the lid 212 rests against the circumferential sidewall 538 of rotor body 210, there is sliding contact between the lid 212 and the circumferential sidewall 538 that does not impede removal of the lid 212. To create a tight seal, the lid 212 may be forced downwardly against the circumferential sidewall 538 by the lid screw 214 as previously described. In response to being compressed, the O-ring 430 may expand radially such that it presses against the circumferential sidewall 428 of lid 212 and the circumferential sidewall 538 of rotor body 210, thus creating a seal. The lid 212 may thereby be securely sealed proximate the upper end of the rotor body 210, but easily removable by unscrewing the lid screw 214 to release the downward force exerted upon the lid 212. When the force exerted by the lid screw 214 is released, the O-ring 430 may retract away from the circumferential sidewall 538 of rotor body 210 so that there is only sliding contact between the lid 212 and the circumferential sidewall 538 of rotor body 210. The lid 212 can then be easily removed.

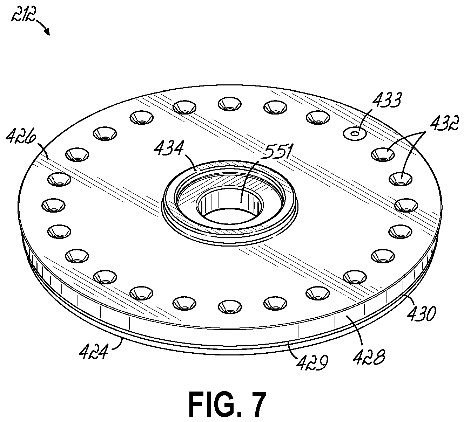

Fig. 6 also shows the orientation of the balancing weight 436 within the balancing aperture 432 of lid 212. In the depicted embodiment, the balancing apertures 432 are located on the bottom surface 424 of the lid 212. Thus, the balancing weights 436 must be installed in the balancing apertures 432 of lid 212 prior to securing the lid 212 to the rotor body 210. In order to add, remove, or move balancing weights 436 or trial weights 433 in the lid 212, the lid 212 must be removed. Fig. 7 depicts an alternative embodiment of the lid 212 in which the balancing apertures 432 are located on the top surface 426 of the lid 212. In this embodiment, it may not be necessary to remove and replace the lid 212 during the modal balancing process.

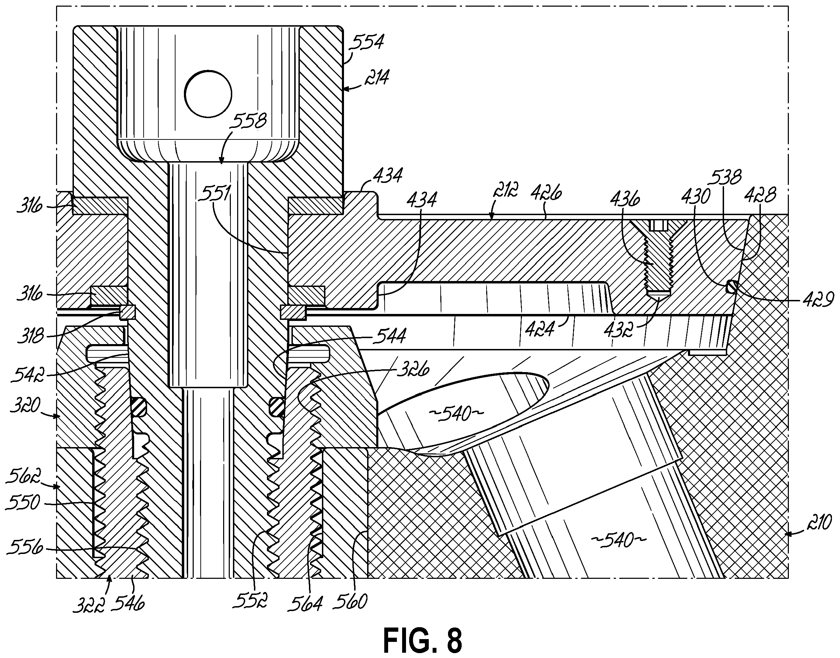

Fig. 8 depicts a detailed view of an embodiment of the rotor 102 featuring the lid 212 of Fig. 7 with balancing apertures 432 located on the top surface 426 of the lid 212. The detailed view shows the interface between the lid 212 and the rotor body 210, and the orientation of a balancing weight 436 within the balancing aperture 432 of the lid 212.

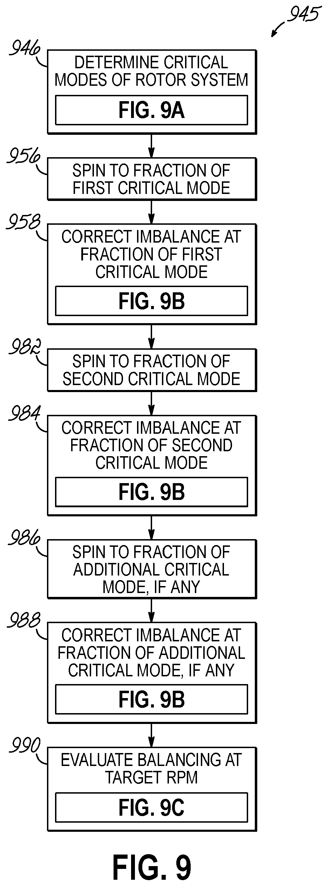

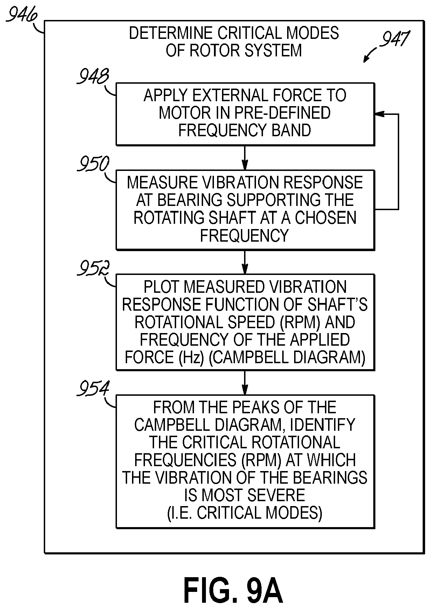

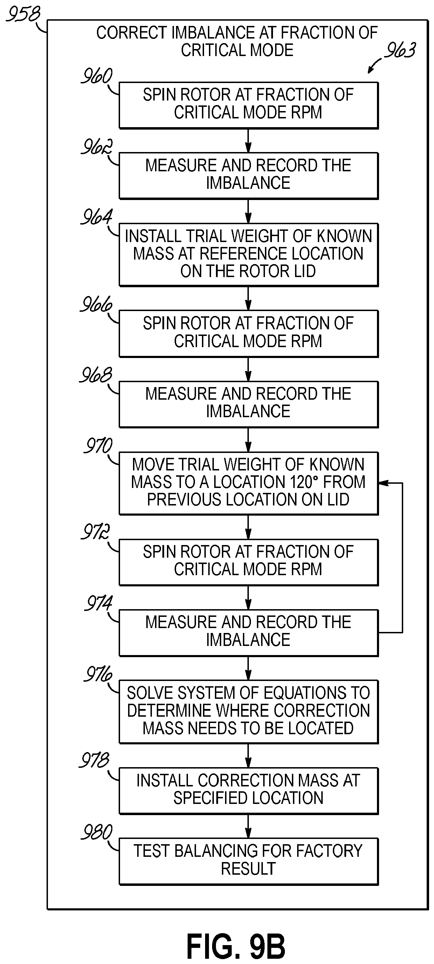

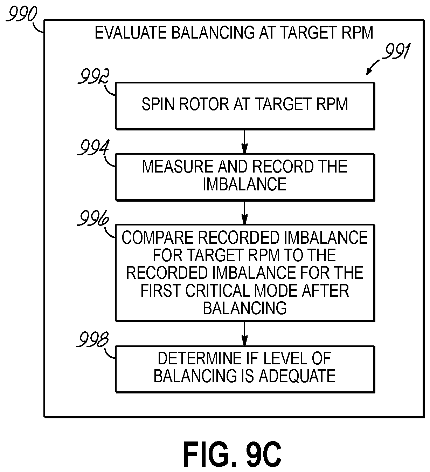

Fig. 9 depicts a flowchart illustrating an exemplary modal balancing process 945 for balancing the rotor 102 in the centrifuge 100. Centrifuges may have natural harmonic resonance frequencies that can result in standing wave patterns at certain critical speeds. These standing wave patterns are often referred to as "critical modes". Advantageously, by minimizing imbalances in the rotor, it may be possible to pass through these critical modes without disruption, and achieve smooth operation of the centrifuge at high speeds. The process 945 may detect imbalances in the rotor 102 occurring at identified critical modes, and identify at least one target location on the lid 212 and at least one corresponding target amount of weight whose addition at the target location assists in properly balancing the rotor 102. Although the illustrated process 945 may be used to balance rotors 102 including any of the various embodiments of the lid 212 illustrated in Figs. 4-8, references may be limited to a specific embodiment of the lid 212 for the purposes of clarity.

In block 946, the process 945 determines one or more critical modes in which the rotor 102 may be imbalanced. The process 945 may then proceed to block 956 and spin the rotor 102 in the centrifuge 100 at a test speed that is a fraction (e.g., 3/4 or 75%) of a critical speed at which the centrifuge 100 enters one of the critical modes determined in block 946, e.g., at a fraction of the lowest critical speed. The test speed may be less than the critical speed because spinning the rotor 102 at the critical speed could damage the centrifuge 100 due to the intensity of the imbalance experienced while in the critical mode. There may be a range of values that are acceptable for test speed at which the rotor 102 is spun. For example, the rotor 102 may be spun at a speed between 70% and 95% of the critical speed. By way of example, the rotor 102 may be spun at 70% or at 85% of the critical speed.

In block 958, the process 945 may correct the imbalance of the rotor 102 at the test speed at which the rotor 102 is spun at in block 956. Correcting the imbalance determined at the test speed may allow the rotor 102 to be spun at a higher speed than before the imbalance was corrected.

In block 982, the process 945 may spin the rotor 102 in the centrifuge 100 at another test speed that is a fraction of another (e.g., a higher) critical speed determined in block 946. As previously described, the rotor 102 may spun at this other test speed that is lower than the other critical speed to avoid damaging the centrifuge 100. In block 984, the process 945 may correct the imbalance of the rotor 102 at the other test speed at which the rotor 102 was spun in block 982.

In block 986, the process 945 may spin the rotor 102 at yet another test speed that is a fraction of yet another critical speed (i.e., one higher than the previous critical speed) determined in block 946, if another critical speed is available. In block 988, the process 945 may again correct the imbalance of the rotor 102 at the test speed at which the rotor 102 was spun in block 986. Thus, the process 945 may iteratively spin the rotor to a fraction of a critical speed, correct any imbalances that occur at that speed, and then select another critical speed at which to balance the rotor. This process may continue until a desired level of balance is achieved. It should be understood that the number of balancing runs can vary (e.g., may be less than or greater than three runs). For example, in some cases, the process 945 may only need to perform one balancing run to achieve the desired level of balance.

In block 990, the process 945 may evaluate the balancing of the rotor 102 at a target speed in the centrifuge 100. The target speed may preferably be the rotational speed at which the user will typically operate the centrifuge 100. In an alternative embodiment, the target speed may be a maximum operational speed of the centrifuge 100, which may depend on the type of centrifuge 100 being used.

Fig. 9A depicts a flowchart illustrating an exemplary subprocess 947 that may be used to determine the critical modes of the rotor system in block 946. In block 948, the subprocess 947 may apply an external force to a component of the centrifuge 100, e.g., the motor 106. The external force may include frequencies in a pre-determined frequency band. One way to apply the external force may be to operatively couple a chirp or sine-sweep signal produced by a modal shaker to the motor 106. In an alternative embodiment, the external force may be provided by an impulsive load impact delivered to the motor 106 by an instrumented hammer. Other ways of applying external forces to the motor 106 or other components of the centrifuge 100 having frequency components in a pre-determined frequency band may also be used.

In block 950, the subprocess 947 may measure the vibrational response of the rotor 102 to the applied external force. The vibrational response may be measured at the motor bearing that supports the rotating spindle 104 while the rotor 102 is spinning in the centrifuge 100. The measurements of the vibration response may be taken at selected rotational speeds of the rotor 102. For example, measurements of the vibration response may be taken at intervals of 1,000 RPM up to the typical or the maximum operational speed of the centrifuge 100. The vibration response of the bearing to the external force may be measured at each of the selected rotational speeds by the sensor 108. The output of the sensor 108 may be operatively coupled to a suitable device for analyzing the output signal, such as a computer running dynamic signal analyzer or digital data recorder software.

In block 952, the subprocess 947 may plot or otherwise analyze the measured vibrational response data obtained in block 950 as a function of both the rotational speed of the rotor 102 at which the vibrational responses were recorded, and the frequency of the applied force. The data used to generate the plot may be obtained, for example, by using a modal shaker to generate the external force via chirp or sine wave that is swept across the predetermined frequency band. The plot may be waterfall plot of an experimentally measured vibration response of a rotor as a function of rotation speed and excitation frequency, commonly referred to as a Campbell diagram. Campbell diagrams typically include plurality of slices each corresponding to a rotational speed of the rotor 102 and which depict the frequency power spectrum of vibrations detected at that rotational speed. Each slice may include a peak that corresponds to an eigenfrequency of the rotor at that rotational speed. As the rotational speed approaches a critical mode, the intensity of the vibration at the eigenfrequency may increase.

In block 954, the subprocess 947 may identify one or more critical rotational frequencies (i.e., critical speeds) of rotor 102 based on the Campbell diagram. In an exemplary embodiment of the present invention, critical speeds may occur at 5,000, 37,000, and 55,000 RPM. From the eigenfrequencies of rotor 102, critical modes of the rotor 102 may be identified through computer analysis. The critical modes of the rotor 102 may occur at the rotational speeds where the vibration at the bearings is most severe. It is at these rotational speeds that the imbalance of the rotor 102 may be greatest. Thus, these rotational speeds are the rotational speeds at which the rotor 102 will need to be further balanced. With the knowledge of the speeds at which the balance of the rotor 102 needs to be corrected, the process 945 may proceed with determining where to place balancing weights 436.

Fig. 9B depicts a flowchart illustrating an exemplary imbalance correction subprocess 963 that may be used to correct rotor imbalances in blocks 958, 984, and 988 of process 945 at a fraction of a critical speed, e.g., a fraction of 5,000, 37,000, or 55,000 RPM. Each time the subprocess 963 is used to correct a rotor imbalance at a subsequent critical speed (e.g., 37,000, 55,000), the corrective action may differ in at least one detail from the result determined for the initial or previous critical speed (e.g., 5,000 RPM), as described in detail below.

In block 960, the subprocess 963 may cause the rotor 102 to spin at an initial test speed that is a fraction of an initial critical speed. Advantageously, by using a test speed that is a fraction of the initial critical speed, the subprocess 963 may avoid damaging the centrifuge 100 due to the intensity of the level of imbalance that could be experienced operating in the critical mode.

In block 962, the subprocess 963 may measure and record the imbalance of the rotor 102 experienced while the rotor 102 spins at the initial test speed. The imbalance of the rotor 102 may be measured, for example, by the sensor 108. To this end, the subprocess 963 may determine a root mean square ("RMS") value of a power spectral diagram of the measured vibrational response. The RMS value of the power spectral diagram may be recorded, and may be the preferred measurement parameter for determining the imbalance of the rotor.

In block 964 of the subprocess 963, a trial weight 433 having a known mass may be installed in the balancing aperture 432 at the reference location 213 on the lid 212. Preferably, the trial weight 433 may be similar in mass to the balancing weights 436 used to balance the rotor 102. The reference location 213 can be the location of any of the balancing apertures 432 located circumferentially around the rim of the lid 212. Once the reference location 213 is selected, the same reference location 213 should be used, and the lid 212 should be maintained in a consistent circumferential position relative to the rotor body 210, for the remainder of the balancing process.

In block 966, the subprocess 963 again spins the rotor 102 at the fraction of the initial critical speed with the trial weight 433 in place. Once the rotor 102 is up to speed, the subprocess 963 proceeds to block 968 and again measures and records the imbalance of the rotor 102 while it is spinning at this speed. The subprocess 963 may then determine and record the RMS value of the power spectrum of the measured vibrational response.

In block 970 of the subprocess 963, the trial weight 433 may be moved from the reference location 213 to another balancing aperture 432. In one embodiment, the trial weight may be moved to a balancing aperture offset 120 degrees in a clockwise direction from the previous location on the lid 212. Moving the trial weight by 120 degrees may allow the subprocess 963 to correct a rotor imbalance with three runs. In an alternative embodiment, the trial weight 433 may be moved 60° in a clockwise direction each time, in which case the subprocess 963 may need to perform six runs. In yet another embodiment, the trial weight 433 may be moved 90 degrees in a clockwise direction each time, in which case the subprocess 963 may include four runs. Embodiments of the subprocess 963 that move the trial weight 433 in smaller increments and perform more runs may have more data from which to decide where to put the selected balancing weight(s) 436. However, it has been determined that three measurements with a radial displacement of 120 degrees is usually sufficient to determine the positioning and mass of the selected balancing weights 436.

In response to the trial weight 433 being moved, the subprocess 963 may proceed to block 972 and spin the rotor 102 at the fraction of the critical speed. Once the rotor 102 is up to speed, the subprocess 963 may proceed to block 974, measure and record the imbalance of the rotor 102, determine the RMS value of the power spectral content of the vibrations, and record the RMS value.

The subprocess 963 may return to block 970 and iteratively repeat moving the trial weight 433, spinning the rotor 102, and measuring and recording imbalance data until the trial weight has been placed in each of a plurality of positions in the lid 212. For an incremental offset angle of 120 degrees, one additional run may be performed such that the trial weight 433 is moved another 120 degrees from its previous location on the lid 212, i.e., 240° from the original reference location 213. Each run provides an additional imbalance data point. The imbalance data from the trial weight 433 being installed at three locations on the lid 212 together with the initial imbalance information of the lid 212 with no trial weight 433 may provide the user with the information needed to determine where a balancing weight 436 should be installed on the lid 212, and what mass that balancing weight 436 should have in order to counter the intrinsic imbalance of the rotor 102. The incremental offset angle $\theta$ may be selected so that 360 degrees is an integer multiple of the offset angle $\theta$. That is, an incremental offset angle $\theta = 360/n$, where $n$ is an integer greater than one.

Once sufficient imbalance data has been collected, the subprocess 963 may proceed to block 976 and solve a system of equations in order to determine where a balancing weight 436 should be installed on the lid 212 and what mass that balancing weight 436 should have. The system of equations to be solved may comprise, in one embodiment, the following three equations:

$$\overrightarrow{\alpha U_{0°}} = \overrightarrow{A_1} - \overrightarrow{A_0} \tag{1}$$

$$\overrightarrow{\alpha U_{120°}} = \overrightarrow{A_2} - \overrightarrow{A_0} \tag{2}$$

$$\overrightarrow{\alpha U_{240°}} = \overrightarrow{A_3} - \overrightarrow{A_0} \tag{3}$$

Where a is defined as an influence coefficient that is the ratio of the balancing weight 436 divided by the trial weight 433, $U = \varepsilon \cdot M$ is defined as the imbalance, $\varepsilon$ is the eccentricity of the mass from the center line of the rotation, and $M$ is the mass of the rotor 102. The imbalance of the rotor 102 can be expressed as a vector having a magnitude and a phase. In vector form, the imbalance of the rotor 102 can be written as:

$$\overrightarrow{\alpha U} = |A_0| \cdot e^{i\emptyset} \tag{4}$$

For example, the value for the initial imbalance of the rotor 102 can be expressed in vector form, utilizing the above noted equation, as: $\overrightarrow{A_0} = |A_0| \cdot e^{i\emptyset}$. As shown by the equation, the imbalance vector $\overrightarrow{A_0}$ can be broken down into its components-the magnitude of the imbalance, $|A_0|$, and the phase of the imbalance relative to a chosen reference location 213, $e^{i\emptyset}$. The same can be done for the value of the imbalance for each instance that a trial weight 433 is introduced to the rotor 102. However, for each instance where a trial weight 433 is introduced to the rotor 102, the value of the initial imbalance, intrinsic to the rotor 102 itself, may be subtracted in order to determine the additional "amount" of imbalance added to the rotor 102 by adding a trial weight 433 at a specified location. By writing each of the imbalance vectors in the form of Eq. 4 (i.e., in terms of magnitude and direction) and solving the system of equations as shown in Eqs. 1-3, we can determine the radius (R) and phase ($\Phi$) of the needed balancing weight 436. From the determined radius (R), following equation can be used to determine the weight needed for the balancing weight 436:

$$W_c = |T_W| \cdot \frac{|A_0|}{|R|} \qquad\qquad (5)$$

Where $W_c$ is the mass of the balancing weight 436 and $T_W$ is the mass of the trial weight 433 used in testing the rotor 102. The phase ($\Phi$), determined above, represents the angle with respect to the chosen reference location 213 at which the balancing weight 436 is to be installed. The mass of the correction weight, $W_c$, represents how heavy the balancing weight 436 to be installed should be in order to balance the rotor 102 at the particular mode.

By way of example, assume the following measurements were taken in by the subprocess 963 while measuring and recording the imbalance of the rotor 102:

$$A_0 = 0.225$$

$$A_1 = 0.357$$

$$A_2 = 0.184$$

$$A_3 = 0.395$$

$$T_W = 1.01\ grams$$

Inserting those measured quantities into the above provided equations yields the following:

$$|R| = 0.178$$

$$\emptyset = 109.57°$$

Taking the determined value for the radius ($R$) and plugging it into the above provided equations yields:

$$W_c = 1.44\ grams$$

Thus, the balancing weight 436 needed to balance the rotor 102 at the particular chosen critical mode should weigh 1.44 grams and should be placed in a balancing aperture 109.57° from the previously selected reference location 213.

Referring again to Fig. 9B, in block 978 of subprocess 963, the identified balancing weight 436 may be installed at the specified location determined by the modal balancing process. A suitable balancing aperture 432 corresponding to the target location(s) may then be selected as well as the balancing weight(s) 436, having a weight relatively close to the target amount of weight determined by the modal balancing method. Generally, a user may take a balancing weight 436 of appropriate mass and install it in the balancing aperture 432 corresponding to specified location. Referring back to the above example, if the lid 212 that is being used has a balancing aperture 432 located 109.57° from the reference location 213, then a user may simply install a balancing weight 436 of appropriate mass in that particular balancing aperture 432.

If the lid 212 does not have a balancing aperture 432 specifically located at the location determined by the modal balancing method, vector calculations may be used to determine approximate locations in which to place balancing weights 436. The resultant balance vector of the multiple balancing weights 436 may be equivalent to that of a single balancing weight 436 at the specified location. Referring back to the above example, if the lid 212 does not have a balancing aperture 432 109.57 degrees from the reference location 213, vector calculation may be used to determine the mass of balancing weights 436 needed at locations near the 109.57° mark; by way of example, the two balancing apertures 432 closest to the target location. For a lid 212 with 24 balancing apertures 432 spaced 15 degrees from each other circumferentially around the rim of lid 212 (as shown in Fig. 4), the selected balancing apertures 432 may be located at 105 degrees and 120 degrees, which are the balancing apertures 432 on either side of where the 109.57 degrees mark would be. A vector can be calculated that would result from placing a balancing weight 436 in the balancing aperture 432 at 105 degrees and in the balancing aperture 432 at 120°. In this example, the resultant vector from one balancing weight 436 weighing 1.01 grams located at the balancing aperture 432 at 105 degrees clockwise from the reference location 213 and one balancing weight 436 weighing 0.44 grams located at the balancing aperture 432 at 120° clockwise from the reference location 213, respectively, would provide a vector equivalent to that of a 1.44 gram balancing weight 436 located 109.57 degrees from the reference location 213. In certain embodiments of the invention, balancing weights 436 may be selected that have predetermined masses close to the masses calculated to provide the optimum balance vector. For example, in the above case, weights having masses of 1.00 grams and 0.50 grams could be selected from a set of balancing weights having predetermined masses in 0.25 gram increments. In any case, this method of calculating a resultant vector equivalent to the determined correction weight, $W_c$, and phase $\Phi$, can be generalized and used to determine the appropriate number, mass, and location of balancing weights 436.

In block 980, the subprocess 963 may test the rotor 102 with the balancing weight(s) 436 installed in the appropriate balancing aperture(s) 432 to determine if the balancing is satisfactory. To this end, the rotor 102 may be spun to the fraction of the previously determined critical speed, the vibrational response measured, and the RMS value of the power spectral content of the vibrational response determined and recorded. This RMS value can be compared to the RMS value of the imbalance of the rotor 102 prior to beginning the subprocess 963. If balancing was performed correctly, the RMS value of the imbalance after balancing should be less than the RMS value of the imbalance prior to modal balancing. Further, the imbalance post-balancing should fall within acceptable tolerances for centrifuge 100 operation.

Referring again to Fig. 9, if the target speed for use of the rotor 102 is greater than the initial critical speed, the process 945 may proceed to block 982 and spin the rotor 102 to the fraction of another (e.g., next incrementally higher) critical speed. In block 984, the process 945 may correct the imbalance as described above with respect to the subprocess 963, except that the balancing weight 436 (as illustrated in Fig. 4C) or balancing weights 436 (as illustrated in Fig. 4D) previously added to the lid 112 of rotor 102 remain in the indicated balancing aperture(s) 432 during the modal balancing process.

Accordingly, in block 964 of subprocess 963, the trial weight 433 may be installed at the reference location 213 of the lid 212, with the lid 212 having balancing weight(s) 433 installed essentially as shown in Fig. 4C or Fig. 4D. In block 966, the subprocess 963 may spin the rotor 102 at the fraction of the next (e.g., higher) critical speed. In block 970, the trial weight 433 may be moved clockwise by the incremental offset angle $\theta$, e.g., 120 degrees to the position shown in Fig. 4A. During this iteration of the imbalance correction subprocess 963, the balancing weight 436 or weights 436 from the previous modal balancing process remain in place. The subprocess 963 may then proceed to block 972, and again spin the rotor 102 at the fraction of the currently selected critical speed. The subprocess 963 may thereby repeat the balancing process as described above with respect to the initial critical speed, but at the currently selected critical speed and with the balancing weight 436 or weights 436 from previous balancing run still in place. The analysis of position and weight needed to correct the measured imbalance described above with respect to Fig. 4C for the initial modal balancing may then be repeated for the current modal balancing.

If the primary focus is on modal balancing at or near the second critical speed, then the subprocess 963 may proceed to block 978 and the full amounts of balancing weight(s) 436 identified installed at the identified position or positions. The subprocess 963 may then proceed to block 980 and estimate and test the amount of likely imbalance at or near the initial critical speed. Testing may include performing test balancing at the defined fractions of both the initial critical speed and the subsequent critical speed. If the amount of imbalance at or near the initial critical speed has become excessive, the mass of the balancing weight 436 may be reduced and the balance retested at both critical speeds to determine if the imbalance is at an acceptable level for each rotational speed.

Referring again to Fig. 9, if there are one or more higher critical speeds within the desired operating range of the rotor 102, then the modal balancing process 945 may proceed to block 988 and repeat the imbalance correction subprocess 963 as described above, but with balancing weights 436 in place from each of the previous iterations of the imbalance correction subprocess 963. Thus, the process of correcting imbalances may be executed for one or more critical modes until the rotor 102 is balanced in such a way as to optimize operation of the centrifuge over a desired operating range of rotational speeds.

There are references in the preceding description which additional balancing weights 436 are added during the modal balancing process 945, while leaving in place the balancing weight(s) 436 from the preceding iterations of the imbalance correction subprocess 963. However, it should be understood the same result may be achieved by calculating and then implementing an equivalent balance vector using a smaller number of balancing weights 436 after removing the previously installed balancing weight(s) 436.

Fig. 9C depicts a flowchart of a balance evaluation subprocess 991 that may be executed by the modal balancing process 945 in block 990. The balance evaluation subprocess 991 may be used to evaluate the balancing of the rotor 102 at a target speed. In block 992, the subprocess 991 may cause the centrifuge 100 to spin the rotor 102 at the target speed. The target speed may be the rotational speed at which the user intends to operate the centrifuge 100. Alternatively, the target speed may be the maximum operational speed of the centrifuge 100. The maximum speed of the centrifuge 100 may depend on the type of centrifuge 100 that is being used as well as how well the rotor 102 has been balanced.

In block 994, the subprocess 991 may measure and record the imbalance of the rotor 102 experienced when the rotor 102 is spun at the target speed within the centrifuge 100 as described above. The subprocess 991 may then proceed to block 996 and compare the recorded imbalance at the target speed to the recorded imbalance for the initial critical speed, post-balancing. To this end, the RMS value of the imbalance at the target speed may be compared to the RMS value of the imbalance at the fraction of the initial critical speed after balancing the rotor 102 at that speed.

In block 998, the subprocess 991 may determine if the level of balancing is adequate. Balancing may be considered to have been performed adequately, for example, if the RMS value of the imbalance at the target speed is approximately equivalent to the RMS value of the imbalance at the fraction of the initial critical speed immediately after balancing the rotor 102 at that speed. That is, before any further iterations of the imbalance correction subprocess 963. Approximately equal RMS values may demonstrate that the balancing of the rotor 102 at subsequent critical speeds did not interfere with the balancing of the rotor 102 at previous critical speeds. In other words, balancing the rotor 102 at a subsequent critical speed did not throw off the balancing previously performed at the initial critical speed. Further, the imbalance of the rotor 102 post-balancing should fall within acceptable tolerances for centrifuge 100 operation.

Subsequently, the rotor 102 may be re-balanced by detecting new imbalances in the rotor 102 and by threadably disengaging the one or more balancing weights 436 from the respective balancing apertures 432, relocating the removed balancing weight(s) 436 to different balancing apertures 432, threadably engaging one or more different balancing weights 436 with one or more different balancing apertures 432, or replacing the removed balancing weight(s) 436 with one or more balancing weights 436 having different lengths or masses, for example. The use of balancing weights 436 and balancing apertures 432 may eliminate the need to repeatedly drill holes into the rotor body 210 or to plug such drilled holes when rendered obsolete during re-balancing.

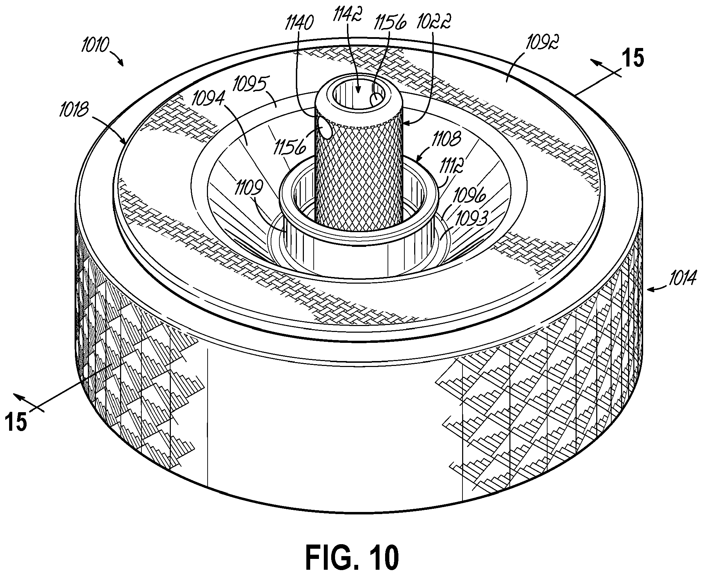

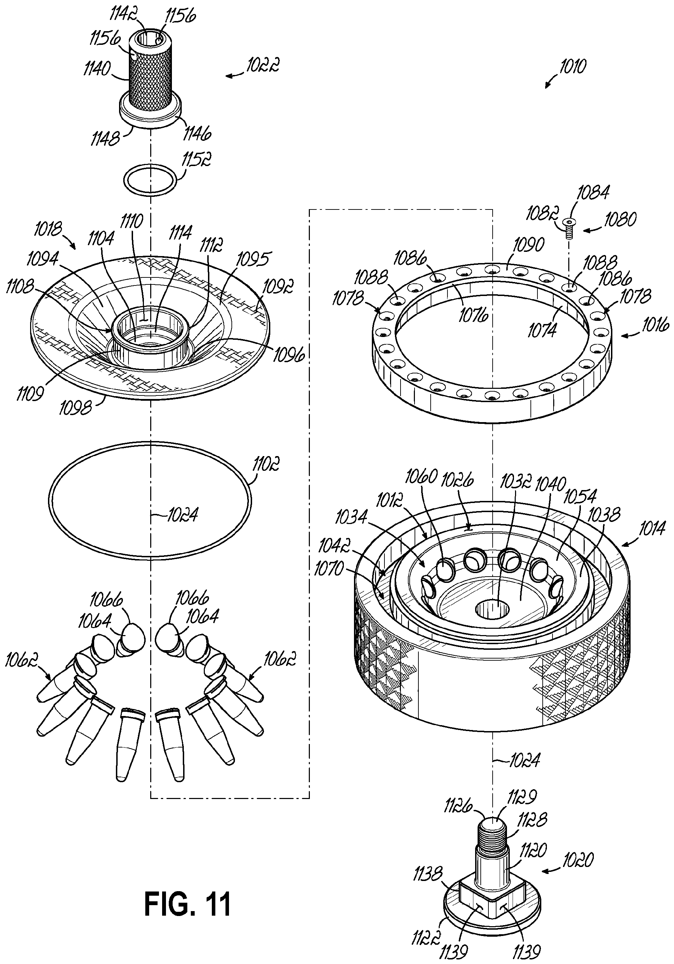

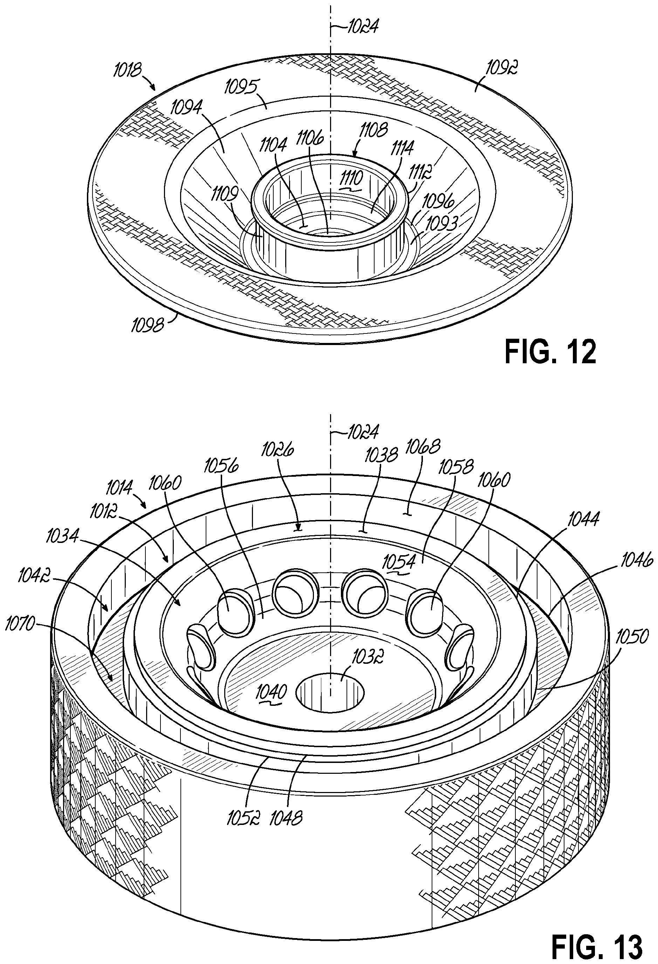

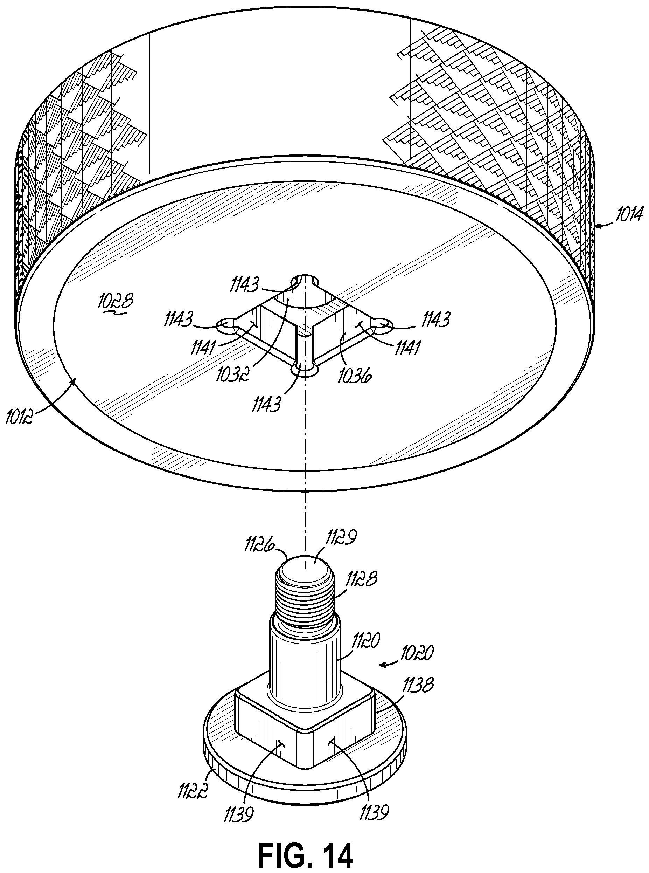

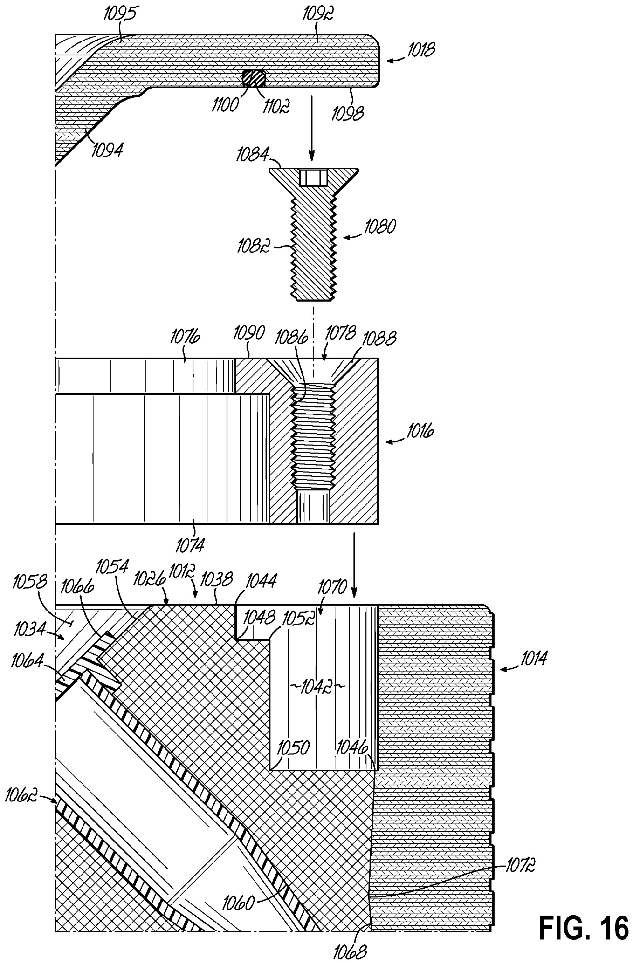

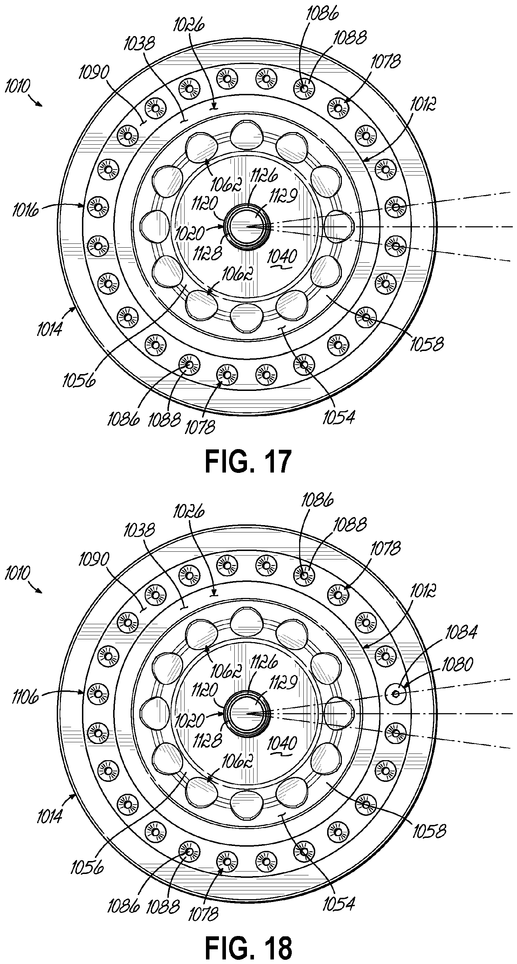

Figs. 10-18 depict an exemplary rotor 1010 (e.g., a 12 × 1.5 mL fixed-angle rotor) in accordance with another exemplary embodiment of the present invention. The rotor 1010 includes a rotor body 1012, a reinforcement 1014, a balance ring 1016, a lid 1018, a drive hub 1020, and a lid screw 1022. The rotor 1010 has an axis of rotation 1024 about which the rotor 1010 is configured to rotate when used in a centrifuge, and about which the components of the rotor 1010 are concentrically arranged.

The rotor body 1012 may be made from a carbon fiber composite or other suitable lightweight, rigid material, and includes an upper surface 1026, a lower surface 1028, a circumferential sidewall 1030, and an elongated bore 1032 that passes through the upper and lower surfaces 1026, 1028. The elongated bore 1032 may be axially aligned with the axis of rotation 1024, and intersects an upper recess 1034 in the upper surface 1026 and a lower bore opening 1036 in the lower surface 1028 of rotor body 1012. As described in more detail below, the lower bore opening 1036 may have a horizontal cross sectional shape that is keyed to the drive hub 1020 to prevent rotation of the rotor body 1012 relative to the drive hub 1020.

The upper surface 1026 of rotor body 1012 may include an annular surface 1038, a central surface 1040 that is recessed axially downward relative to the annular surface 1038, and an annular groove 1042. The annular groove 1042 may define an outer perimeter 1044 of the annular surface 1038 and an upper edge 1046 of the circumferential sidewall 1030. The annular groove 1042 may be defined by an upper rabbet 1048 and a lower rabbet 1050 that overlap to define a shoulder 1052. The central surface 1040 may be connected to the annular surface 1038 by a connecting surface 1054. The connecting surface 1054 may extend axially upward and radially outward from an outer perimeter of the central surface 1040 to an inner perimeter of the annular surface 1038. The connecting surface 1054 may be oriented such that it faces axially upward and radially inward, and may include a lower portion 1056 and an upper portion 1058. The upper portion 1058 of connecting surface 1054 may be elevated above the lower portion 1056 in a direction normal to the connecting surface 1054.

The rotor body 1012 may further include a plurality of cavities 1060 (e.g., 12 cavities) each extending axially downward and radially outward from the lower portion 1056 of connecting surface 1054 and into the rotor body 1012. In an embodiment of the invention, the plurality of cavities 1060 may comprise a plurality of circumferentially spaced tubular cavities, each tubular cavity having an open end configured to receive a sample container. Each cavity 1060 may have a central axis that is normal to the connecting surface 1054, and be suitably sized and shaped receive a sample container 1062. Each cavity 1060 may be configured to hold its respective sample container 1062 in a suitable position and orientation for centrifugation, e.g., at a 45 degree angle relative to the axis of rotation 1024.

Each sample container 1062 may be configured to hold an amount of a sample suspension (e.g., 1.5 ml) and include a cap 1064 that seals the sample container 1062 when pressed into a closed position. The cap 1064 may include a tab 1066 configured to facilitate opening of the sample container 1062. The cavity 1060, sample container 1062, and cap 1064 may be configured so that when the sample container 1062 is fully inserted into its respective cavity 1060, the tab 1066 is supported by the upper portion 1058 of connecting surface 1054. A top portion of the cavity 1060 may also include a counterbore 1067 configured to accept a cylindrical skirt of cap 1064. Advantageously, the counterbore 1067 and pressure from the bottom surface of lid 1018 over the top surface of the cap 1064 may provide sufficient support to prevent any deformation of the cap 1064 under the high g-forces generated by centrifugation. These features may thereby prevent the seal between the cap 1064 and the body of the sample container 1062 from being compromised, or damage to the sample container 1062 itself.

The reinforcement 1014 may include one or more helical windings that extend around and above the circumferential sidewall 1030 of rotor body 1012. An inner surface 1068 of reinforcement 1014 may operate cooperatively with the annular groove 1042 of rotor body 1012 to define a channel 1070 in which the balance ring 1016 is positioned. The reinforcement 1014 may be formed by a filament winding process followed by a compression molding process using a suitable material, such as an epoxy-coated carbon fiber. For example, the reinforcement 1014 may be compression molded onto the rotor body 1012 and balance ring 1016 after placing layers of resin-coated carbon fiber laminate material, or winding one or more strands of carbon fiber, onto the outwardly-facing surface of circumferential sidewall 1030.

To prevent the reinforcement 1014 from moving axially, the circumferential sidewall 1030 may include an inward taper that defines a circumferential recess 1072 in the circumferential sidewall 1030. The inner surface 1068 of reinforcement 1014 may conform to the circumferential recess 1072 so that reinforcement 1014 resists axial movement relative to the rotor body 1012. The reinforcement 1014 may be configured to bear the majority of the centrifugal forces placed on the rotor 1010. Methods of forming reinforcements for centrifugal rotors using a filament winding process are described in detail by U.S. Patent No. 8,323,169, issued December 4, 2012, the disclosure of which incorporated by reference herein in its entirety.

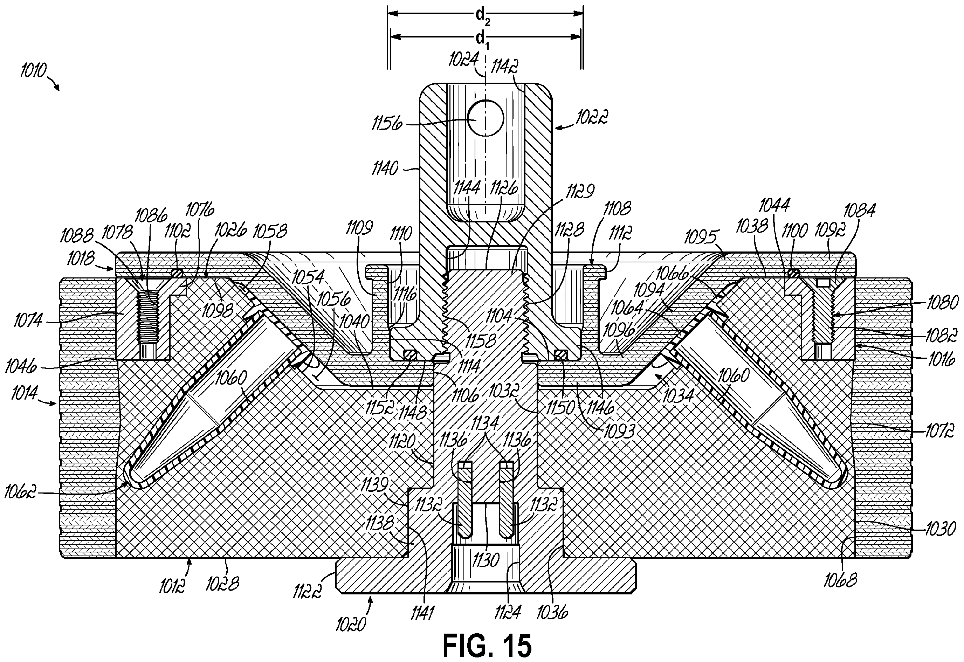

The balance ring 1016 may include a body 1074 having a rectangular cross section and a flange 1076. As best shown by Fig. 15, the flange 1076 may project radially inward from a top portion of the body 1074 of balance ring 1016, and may be configured to engage the shoulder 1052 of rotor body 1012. In an embodiment of the invention, the balance ring 1016 may have an outer diameter equal to or slightly larger than the diameter of the inner surface 1068 of reinforcement 1014. In this embodiment, the balance ring 1016 may be operatively coupled to the rotor 1010 by cooling the balance ring 1016 to a temperature below ambient such that the balance ring 1016 contracts sufficiently to bring its outer diameter below the diameter of the inner surface 1068 of reinforcement 1014. The balance ring 1016 may then be placed in the channel 1070 and allowed to warm back up to ambient temperature. As it warms, the balance ring 1016 may expand until it presses against the inner surface 1068 of reinforcement 1014 such that it is held firmly in place. In an alternative embodiment of the invention, the balance ring 1016 may be heated so that it expands before placing it on the annular groove 1042, and allowed to cool in place so that it is held to the rotor body 1012 by a shrink-fit. In this case, the balance ring 1016 may be placed in the annular groove 1042 of rotor body 1012 prior to forming the reinforcement 1014. In either case, the reinforcement 1014 may hold the balance ring 1016 in place. An adhesive may also be used to operatively couple the balance ring 1016 to the annular groove 1042 of rotor body 1012.

The balance ring 1016 may include a plurality of balancing apertures 1078 each configured to receive a balancing weight 1080. One or more balancing weights 1080 may be selectively positioned in one or more of the balancing apertures 1078 of balance ring 1016 in order to balance the rotor 1010. In an embodiment of the present invention, each balancing weight 1080 may include a threaded shank 1082 and a head 1084. Each balancing aperture 1078 may include a threaded bore 1086 configured to receive the threaded shank 1082 of balancing weight 1080, and a receptacle 1088 (e.g., a countersink, counterbore, or the like) configured to receive the head 1084 of balancing weight 1080. The receptacle 1088 may thereby allow the top of the balancing weight 1080 to be flush with or recessed below a top surface 1090 of the balance ring 1016 when the balancing weight 1080 is fully inserted into the balancing aperture 1078.

The balance ring 1016 may be angularly positioned about the axis of rotation 1024 with respect to the rotor body 1012 such that the balancing apertures 1078 of balance ring 1016 are symmetrically positioned relative to the cavities. This symmetry may result in each of the two balancing apertures 1078 closest to a respective cavity 1060 of rotor body 1012 being an equal distance from, and on opposite sides of, a line extending radially outward from the axis of rotation 1024 and passing thorough the central axis of the cavity 1060. This angular positioning of the balance ring 1016 may provide the ring with an orientation such that each cavity 1060 of rotor body 1012 is angularly centered between the two balancing apertures 1078 of balance ring 1016 closest to the cavity 1060, and ensure positional symmetry between the cavities 1060 of rotor body 1012 and the balancing apertures 1078 of balance ring 1016.

The balance ring 1016 may be made from aluminum or any other suitable lightweight rigid material. One or more balancing weights 1080 may be selectively placed into respective balancing apertures 1078 to offset imbalances in the rotor 1010. For example, balancing weights 1080 may be added to align the center of mass of the rotor 1010 with the axis of rotation 1024 (i.e., to achieve static balance), to align a principle axis of the rotor's moment of inertia with the axis of rotation 1024 (i.e., dynamic balance), or so that the rotor 1010 is both statically and dynamically balanced. Balancing weights 1080 may also be added to the balance ring 1016 during a modal balancing process as described above with respect to Figs. 9-9C.

The lid 1018 of rotor 1010 may include an annular wall portion 1092, a central wall portion 1093, and a conical wall portion 1094, and may be made of a carbon fiber composite, aluminum, or any other suitable rigid low-mass material. The conical wall portion 1094 of lid 1018 may connect an inner edge 1095 of the annular wall portion 1092 to an outer edge 1096 of the central wall portion 1093. The conical wall portion 1094 may be joined to each of the central wall and annular wall portions 1092, 1093 of lid 1018 at an obtuse angle such that the annular wall portion 1092 is offset axially from, and is parallel to, the central wall portion 1093. The resulting shape of the lid 1018 may generally conform to that of the upper surface 1026 of rotor body 1012.

The annular wall portion 1092 of lid 1018 may include a lower surface 1098 having an annular groove 1100 that is configured to receive an elastic member 1102, e.g., an O-ring. The elastic member 1102 may be made of any suitable material (e.g., silicone), and may be configured to engage the top surface 1090 of balance ring 1016 when the lid 1018 is operatively coupled to the rotor 1010.

The central wall portion 1093 of lid 1018 may include an upper surface 1104, a central bore 1106, and a lid-lifting handle 1108 that projects axially upward from the upper surface 1104. The central bore 1106 may have the same diameter as the elongated bore 1032 of rotor body 1012 so that the bores are axially aligned by the drive hub 1020. The lid-lifting handle 1108 may include a cylindrical wall 1109 that is joined to the lid 1018 at a lower end thereof and having an inner surface 1110, and a flange 1112 that projects radially outward from an upper portion of the lid-lifting handle 1108 at a free end of the cylindrical wall 1109 remote from the central wall portion 1093 of lid 1018. The flange 1112 of lid-lifting handle 1108 may provide a grip for grasping the rotor 1010. This grip may improve the ergonomics of installing of the rotor 1010 in, and removing the rotor 1010 from, a centrifuge as compared to rotors lacking this feature. The inner surface 1110 of cylindrical wall 1109 may include a neck 1114 proximate or adjacent to the upper surface 1104. The neck 1114 may have a diameter $d_1$ which is less than the diameter $d_2$ of the main portion of inner surface 1110. The main portion of inner surface 1110 may be joined to the neck 1114 by a bevel 1116.

The drive hub 1020 may include a shaft 1120, a flange 1122 that projects radially outward from a bottom portion of the shaft 1120, and a center bore 1124 which extends axially into a bottom end of the shaft 1120. The center bore 1124 of drive hub 1020 may be axially aligned with the axis of rotation 1024 of rotor 1010, include a bottom surface 1130, and be configured to receive the spindle of the centrifuge (not shown). An upper portion 1126 of shaft 1120 may be configured to receive the lid screw 1022. To this end, the upper portion 1126 of shaft 1120 may include a threaded outer surface 1128 configured to threadedly engage the lid screw 1022.

A portion of the shaft 1120 adjacent to and below the threaded outer surface 1128 may have a reduce radius (e.g., an undercut) to provide thread relief. This thread relief may ensure the lower surface 1148 of flange 1146 engages the upper surface 1104 of the central wall portion 1093 of lid screw 1018 without interference from the shaft 1120 when the lid screw 1022 is threadedly engaged with the drive hub 1020. The upper portion 1126 of shaft 1120 may include a protruding end 1129 at the top thereof. The protruding end 1129 may have a diameter about the same as the minor diameter of the threaded outer surface 1128, and extend a distance of 1.5 to 2.5 thread widths beyond the threads of the threaded outer surface 1128. The drive hub 1020 may be manufactured from a solid billet of metal using computer numerical control (CNC) machining, or any other suitable process.

To prevent the drive hub 1020 from rotating relative to the spindle, one or more drive-pins 1132 may extend axially downward from the bottom surface 1130 of center bore 1124. Each drive-pin 1132 may be configured to engage a respective receptacle in the spindle of the centrifuge. Each drive-pin 1132 may comprise a rod 1134 inserted into a respective bore 1136 that extends axially into the bottom surface 1130 of center bore 1124. Each bore 1136 may be offset radially from the center axis of center bore 1124 so that the drive-pins 1132 would be subjected to a shearing force in response to the spindle applying torque to the rotor 1010 sufficient to, absent the drive-pins 1132, cause slippage between the spindle and drive hub 1020.

A drive portion 1138 of hub 1020 may extend axially upward from the flange 1122 and radially outward from the shaft 1120. The drive portion 1138 of hub 1020 may have a horizontal cross sectional shape that is keyed, or is otherwise complementary, to the horizontal cross sectional shape of the lower bore opening 1036 of rotor body 1012. Keying the drive portion 1138 to the lower bore opening 1036 may prevent the angular position of the rotor body 1012 from shifting relative to the drive hub 1020 under angular acceleration. To this end, the cross sectional shape of the drive portion 1138 may be the same as that of the lower bore opening 1036, a different shape that fits within the lower bore opening 1036 and has one or more faces 1139 that engage corresponding faces 1141 in a sidewall of the lower bore opening 1036, or that is otherwise keyed to the cross sectional shape of the lower bore opening 1036.

For example, the cross sectional shape of the drive portion 1138 may be a polygon (e.g., a square) having the same number of faces 1139, or more faces 1139, than the shape of the lower bore opening 1036. By way of example, for a lower bore opening 1036 having a square-shaped horizontal cross-section, the drive portion 1138 may have a square-shaped, an octagonal-shaped, or other cross-sectional shape having one or more faces 1139 complementary to the faces 1141 of lower bore opening 1036. The lower bore opening 1036 may also include one or more axially-aligned channels 1143 positioned where the vertexes of the faces 1141 would otherwise be to facilitate insertion of the drive portion 1138 of drive hub 1020 into the lower bore opening 1036.

The lid screw 1022 may be made from any suitable material (e.g., aluminum), and comprises a cylindrical body having an outer surface 1140, an upper bore 1142, a lower bore 1144, and a flange 1146 that projects radially outward from a lower end of the cylindrical body. The flange 1146 may have an outer diameter the same as or slightly less than the diameter $d_1$ of neck 1114. The bevel 1116 may guide the flange 1146 into the neck 1114 as the flange 1146 is inserted into the lid-lifting handle 1108 and the lid screw 1022 screwed onto the drive hub 1020. The neck 1114 and bevel 1116 may thereby work cooperatively with the flange 1146 to position the lid screw 1022 concentrically with the lid 1018 and drive hub 1020, thereby aligning the lid 1018 with the axis of rotation 1024 of rotor 1010 during engagement of the lid screw 1022 with the drive hub 1020. The final alignment between the lid 1018 and the axis of rotation 1024 of rotor 1010 may be defined by the engagement of the shaft 1120 of drive hub 1020 and the central bore 1106 of lid 1018.

The flange 1146 may include a lower surface 1148 having an annular groove 1150 configured to receive an elastic member 1152. The elastic member 1152 may be an O-ring or other type of gasket made of a suitable material, such as silicone. The elastic member 1152 may be compressed against the upper surface 1104 of the central wall portion 1093 of lid 1018 in response to tightening the lid screw 1022 against the drive hub 1020. The elastic member 1152 may thereby urge the lid 1018 into operable engagement with the rotor 1010.

The lid screw 1022 may further include one or more pairs of radially-aligned holes 1156 on opposing sides of the upper bore 1142. The radially-aligned holes 1156 may be configured to receive a rod or other tool for applying torque to the lid screw 1022. The radially-aligned holes 1156 may thereby facilitate tightening the lid screw 1022 to the drive hub 1020, and loosening the lid screw 1022 from the drive hub 1020.

The lower bore 1144 of lid screw 1022 may include a threaded inner surface 1158 configured to threadedly engage the threaded outer surface 1128 of drive hub 1020. The protruding end 1129 of shaft 1120 may facilitate this threaded engagement between the drive hub 1020 and lid screw 1022 by providing a clean start to engagement between the threaded outer surface 1128 of shaft 1120 and the threaded inner surface 1158 of lower bore 1144. Threadedly engaging the lid screw 1022 with the drive hub 1020 may urge the lid 1018 against at least a portion of the upper surface 1026 of rotor body 1012. The lid screw 1022 may also urge the lid 1018 against the caps 1064 of sample containers 1062, thereby maintaining the caps 1064 fully seated on the sample containers 1062. In this way, the lid 1018 may also hold the sample containers 1062 in a fully seated position within their respective cavities 1060 by applying a nominal force to the surface of each cap 1064.

Embodiments of the present invention including a balance ring may be balanced using the modal balancing process 945 in a similar manner as described above with respect to Figs. 9-9D. That is, the process 945 may determine one or more critical modes for the rotor 1010 by applying an external force to the rotor 1010 while the rotor 1010 is being rotated at each of a plurality of rotational speeds. The process 945 may measure and record the vibrational responses at each rotational speed. Based on this data, the process 945 may determine the severity of vibrations at each rotational speed. The process 945 may then identify the rotational speeds at which vibrations are most severe as critical speeds.

Once the critical speeds have been identified, the process 945 may spin the rotor 1010 in the centrifuge 100 at an initial test speed that is a fraction of one of the critical speeds, e.g., the lowest critical speed. The process 945 may measure and record the imbalance of the rotor 1010 experienced while the rotor 1010 spins at the initial test speed, e.g., as an RMS value of the power spectral density of vibrations detected at a component of the centrifuge 100, e.g., a motor bearing.

A trial weight of known mass may then be installed in a balancing aperture 1078 at a reference location on the balance ring 1016, which may be the location of any of the balancing apertures 1078 of balance ring 1016 so long as the same balancing aperture 1078 is used as the reference aperture for the remainder of the balancing process. To facilitate consistent placement of weights in the balance ring 1016, one or both of the rotor body 1014 and balance ring 1016 may include a reference mark proximate to one of the balancing apertures 1078. One or more reference marks may also be included on the lid 1018 and rotor body 1014 to facilitate installation of the lid 1018 in the same position relative to the rotor body 1014 during use of the rotor 1010.

The balancing process 945 may then spin the rotor 1010 at the initial test speed, and measure and record the imbalance of the rotor 1010 with the trial weight in place, e.g., by determining and recording the RMS value of the power spectrum of the measured vibrational response. The trial weight may then be moved to another balancing aperture 1078 and the resulting imbalance measured and recorded as described above. The process of moving the trial weight and measuring rotor imbalance may be repeated until sufficient imbalance measurements have been recorded to determine where a corrective mass should be installed in the balance ring 1016, and how large the corrective mass should be in order to counter the intrinsic imbalance of the rotor 1010. One or more balancing weights 1080 may then be installed in respective balancing apertures 1078 of balance ring 1016 that provide a balancing mass close or equivalent to the corrective mass, e.g., using the system of equations described above with respect to adding balancing weights 436 to the lid 212.

The above described process of installing a trial weight in a balancing aperture 1078 of balance ring 1016, spinning the rotor 1010 at a test speed, measuring and recording imbalances, and installing balancing weights 1080 in the balance ring 1016 to balance the rotor may 1010 be repeated for one or more additional critical speeds to achieve an adequate level of balance. To determine if the rotor 1010 has been adequately balanced, the rotor 1010 may then be spun at a target speed, the imbalance measured and recorded, and the imbalance compared to the recorded imbalance at some other rotational speed (e.g., the initial test speed).

## EXPERIMENTAL RESULTS

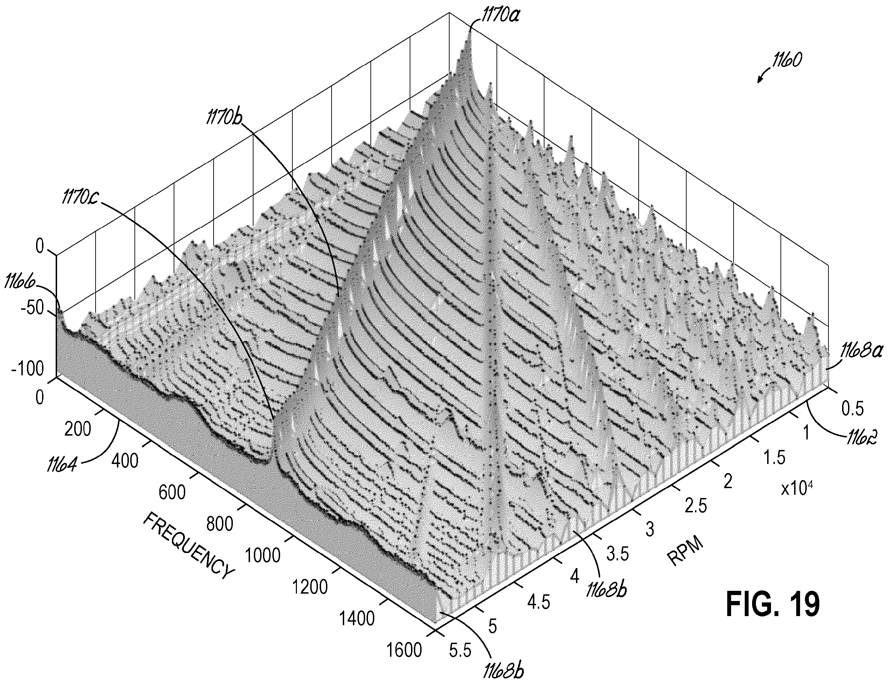

Fig. 19 depicts a graph including a three-dimensional plot 1160, sometimes referred to as a waterfall plot, of an experimentally measured vibration response of a rotor as a function of rotation speed and excitation frequency. The vibration data was generated using a SORVAL MX Plus micro-ultracentrifuge to spin a rotor including a balance ring in accordance with an embodiment of the present invention. SORVAL MX Plus micro-ultracentrifuges are available from Thermo Fisher Scientific of Waltham, Massachusetts, United States. Prior to measuring the vibration data depicted by plot 1160, the rotor was modally balanced for critical speeds of 5,000, 37,000, and 55,000 RPM by selectively adding balancing weights to balancing apertures of the balance ring.

Plot 1160 is commonly referred to as a Campbell diagram, and includes one horizontal axis 1162 corresponding to the rotational speed of the rotor, another horizontal axis 1164 corresponding to the frequency of the vibrations detected by vibration sensor, and a vertical axis 1166 corresponding to the amplitude of the detected vibrations in Decibels (dB) relative to a reference level. The plot 1160 includes a plurality of slices 1168 each corresponding to a rotational speed of the rotor. Each slice 1168 includes a peak 1170 that corresponds to an eigenfrequency of the rotor at that rotational speed. For example, slice 1168a corresponds to a rotational speed of 5,000 RPM, and has a peak 1170a that occurs at 83 Hz. Other peaks 1170 include a peak 1170b on slice 1168b corresponding to an eigenfrequency of 617 Hz for a rotational speed of 37,000 RPM, and a peak 1170c on slice 1168c corresponding to an eigenfrequency of 917 Hz for a rotational speed of 55,000 RPM. As can be seen, the vibrational response of the modally balanced rotor is well behaved across the entire test range of 5,000 to 55,000 RPM.

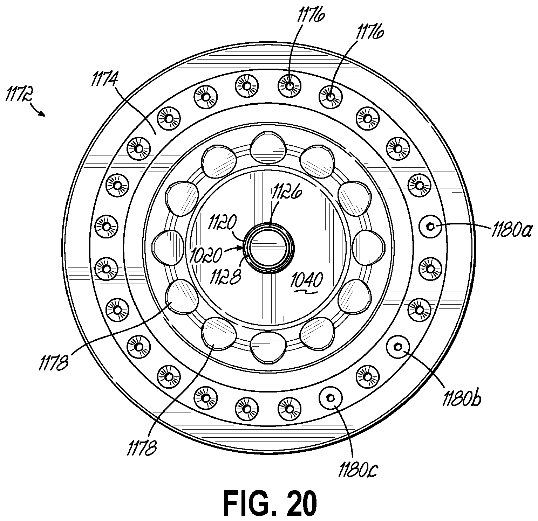

Fig. 20 depicts a 12 × 1.5 mL fixed-angle rotor 1172 which was used to generate the above test data. The rotor 1172 includes a balance ring 1174 having 24 balancing apertures 1176, and contains 12 sample containers 1178. During the modal balancing process, one balance weight 1180a was installed to compensate for an imbalance at 5,000 RPM, another balance weight 1180b was installed to compensate for an imbalance at 37,000 RPM, and a final balance weight 1180c was installed to compensate for an imbalance at 55,000 RPM.

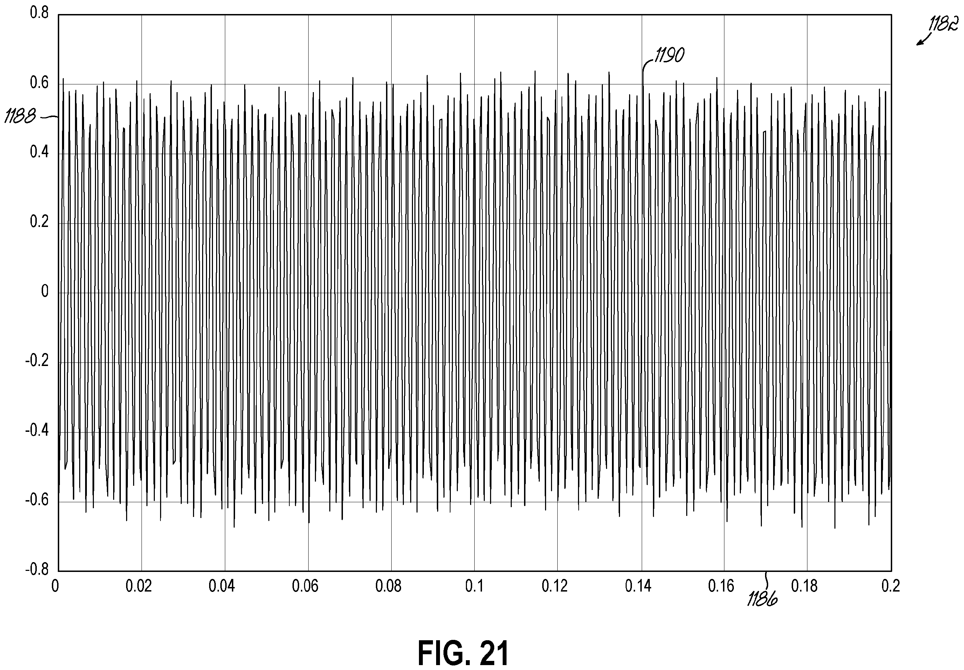

Figs. 21-23 depict graphs 1182-1184 of experimentally measured vibration responses of a rotor prior to performing any balancing on the rotor (graph 1182), after the rotor was balanced on a hard bearing (graph 1183), and after modal balancing of the rotor in accordance with an embodiment of the present invention (graph 1184). The vibration data was generated by using a SORVAL WX+ Series micro-ultracentrifuge to spin a rotor at 37,000 RPM. This centrifuge is also available from Thermo Fisher Scientific Inc. The rotor used was an 8 × 100 mL rotor including a lid having 24 balancing apertures.

Each graph 1182-1184 includes a horizontal axis 1186 corresponding to time in seconds, and a vertical axis 1188 corresponding to the acceleration due to vibration in units of gravitational force equivalent g. Each graph 1182-1184 includes a respective plot 1190-1192 of the vibration response of the rotor. The RMS value of the vibrational acceleration depicted by plot 1190 without balancing (i.e., the imbalanced rotor's vibration) is about 0.43 *g*, with peak values slightly greater than 0.60 *g*. The RMS value of the vibrational acceleration depicted by plot 1191 is about 0.20 *g,* or slightly less than half the amount of RMS vibration of the unbalanced rotor. In contrast, the RMS value of the vibrational acceleration depicted by plot 1192 is about 0.06 g. Thus, the vibrational acceleration of the modally balanced rotor is only about 28% that of the conventionally balanced rotor, and only about 13% that of the unbalanced rotor.

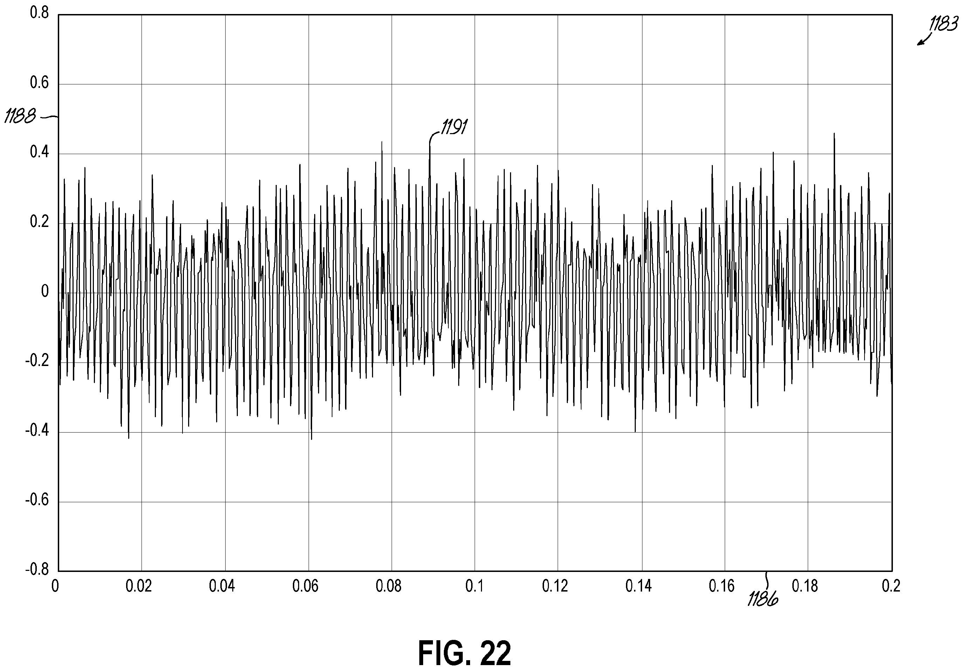

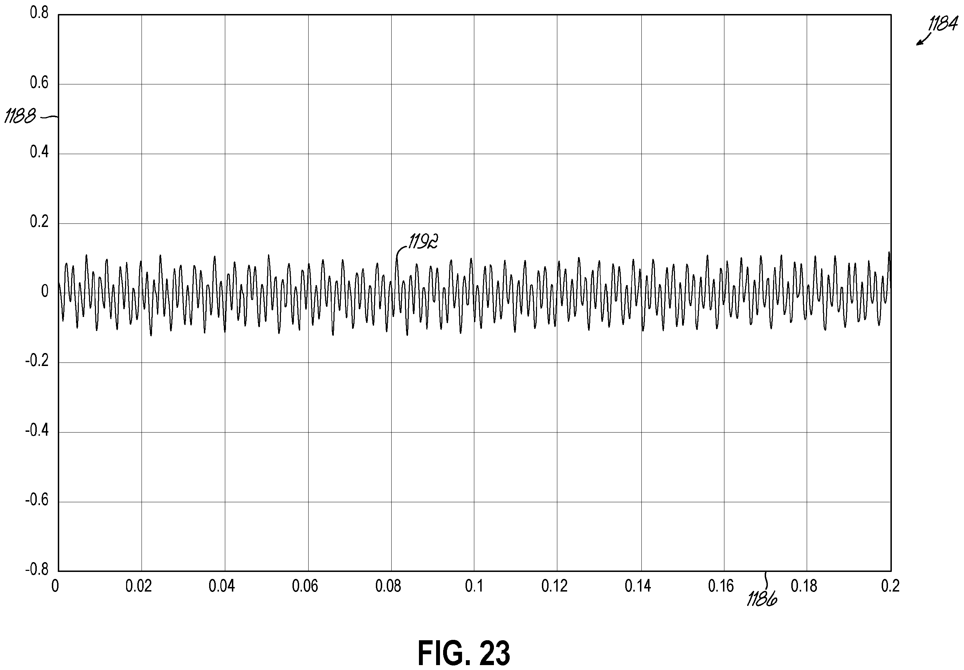

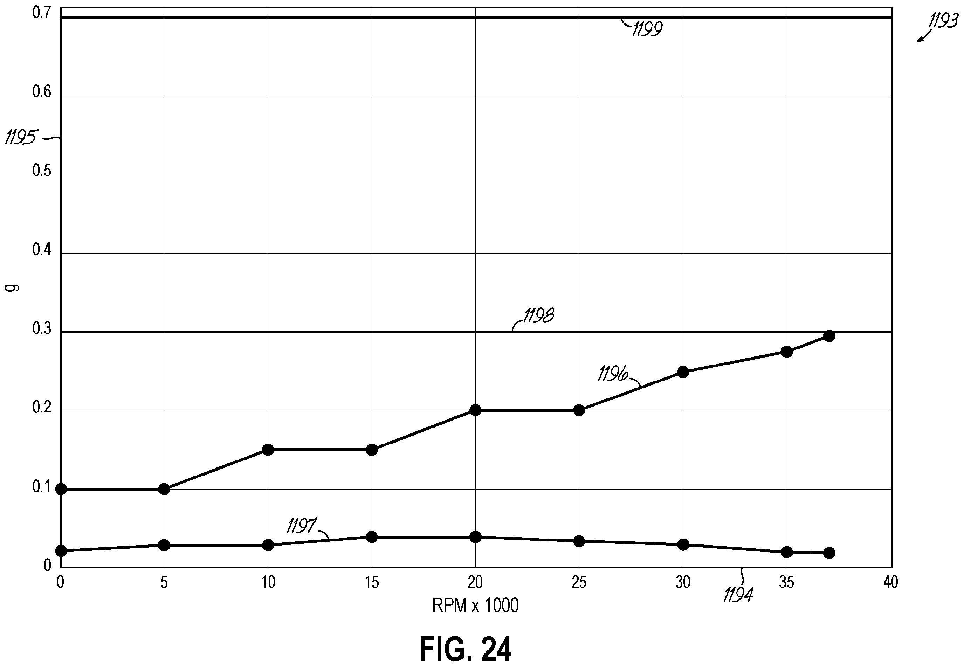

Fig. 24 depicts a graph 1193 showing vibrational RMS level verses rotational speed. The graph 1193 includes a horizontal axis 1194 corresponding to the rotational speed of the rotor in RPM × 1,000, and a vertical axis 1195 corresponding to the RMS value of the sensed vibration in *g.* A plot 1196 illustrates the vibration level of the conventionally balanced rotor that generated the data depicted in Fig. 22, and a plot 1197 illustrates the vibration level of the modularly balanced rotor that generated the data depicted in Fig. 23. A lower threshold 1198 illustrates an exemplary 0.3 g threshold for an acceptable vibration tolerance limit for the centrifuge, and an upper threshold 1199 illustrates an exemplary 0.7 g imbalance switch trigger limit at which the centrifuge may be shut down. As can be seen, the RMS vibration of the conventionally balanced rotor climbs with increased rotational speeds. In contrast, the RMS vibration of the modally balanced rotor is lower than the conventionally balanced rotor at all speeds. In the specific example shown, the RMS vibration reaches a maximum value between 15,000 and 20,000 RPM, and falls with increasing rotational speed thereafter. However, there may be slight variations at different speeds from different serial numbers of the same rotor model. Thus, the graph 1193 of Fig. 24 provides a general view of the effectiveness of modal balancing on a centrifuge rotor, and in particular for rotors driven by a flexible spindle. In any case, it should be apparent that modally balanced rotors may be operated at higher rotational speeds and with less vibration than conventionally balanced rotors.

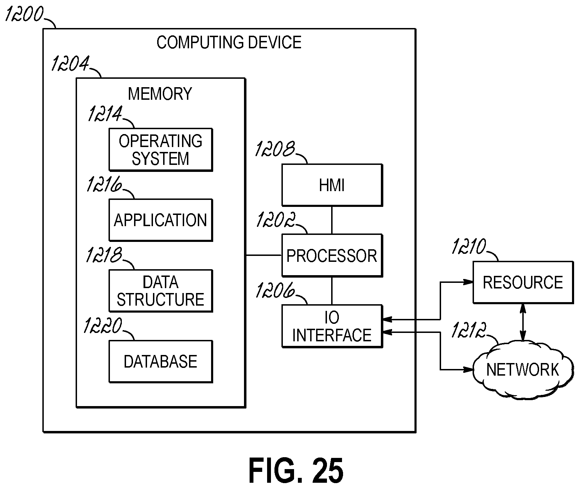

Referring now to FIG. 25, embodiments of the invention described above, or portions thereof, may be implemented using one or more computer devices or systems, such as exemplary computer 1200. The computer 1200 may include a processor 1202, a memory 1204, an input/output (I/O) interface 1206, and a Human Machine Interface (HMI) 1208. The computer 1200 may also be operatively coupled to one or more external resources 1210 via the I/O interface 1206 or a network 1212. External resources may include, but are not limited to, servers, databases, mass storage devices, peripheral devices, cloud-based network services, or any other resource that may be used by the computer 1200.

The processor 1202 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions stored in memory 1204. Memory 1204 may include a single memory device or a plurality of memory devices including, but not limited to, read-only memory (ROM), random access memory (RAM), volatile memory, non-volatile memory, static random access memory (SRAM), dynamic random access memory (DRAM), flash memory, cache memory, or data storage devices such as a hard drive, optical drive, tape drive, volatile or non-volatile solid state device, or any other device capable of storing data.

The processor 1202 may operate under the control of an operating system 1214 that resides in memory 1204. The operating system 1214 may manage computer resources so that computer program code embodied as one or more computer software applications, such as an application 1216 residing in memory 1204, may have instructions executed by the processor 1202. In an alternative embodiment, the processor 1202 may execute the application 1216 directly, in which case the operating system 1214 may be omitted. One or more data structures 1218 may also reside in memory 1204, and may be used by the processor 1202, operating system 1214, or application 1216 to store or manipulate data.

The I/O interface 1206 may provide a machine interface that operatively couples the processor 1202 to other devices and systems, such as the external resource 1210 or the network 1212. The application 1216 may thereby work cooperatively with the external resource 1210 or network 1212 by communicating via the I/O interface 1206 to provide the various features, functions, applications, processes, or modules comprising embodiments of the invention. The application 1216 may also have program code that is executed by one or more external resources 1210, or otherwise rely on functions or signals provided by other system or network components external to the computer 1200. Indeed, given the nearly endless hardware and software configurations possible, persons having ordinary skill in the art will understand that embodiments of the invention may include applications that are located externally to the computer 1200, distributed among multiple computers or other external resources 1210, or provided by computing resources (hardware and software) that are provided as a service over the network 1212, such as a cloud computing service.

The HMI 1208 may be operatively coupled to the processor 1202 of computer 1200 to allow a user to interact directly with the computer 1200. The HMI 1208 may include video or alphanumeric displays, a touch screen, a speaker, and any other suitable audio and visual indicators capable of providing data to the user. The HMI 1208 may also include input devices and controls such as an alphanumeric keyboard, a pointing device, keypads, pushbuttons, control knobs, microphones, etc., capable of accepting commands or input from the user and transmitting the entered input to the processor 1202.

A database 1220 may reside in memory 1204, and may be used to collect and organize data used by the various systems and modules described herein. The database 1220 may include data and supporting data structures that store and organize the data. In particular, the database 1220 may be arranged with any database organization or structure including, but not limited to, a relational database, a hierarchical database, a network database, or combinations thereof. A database management system in the form of a computer software application executing as instructions on the processor 1202 may be used to access the information or data stored in records of the database 1220 in response to a query, which may be dynamically determined and executed by the operating system 1214, other applications 1216, or one or more modules.

In general, the routines executed to implement the embodiments of the invention, whether implemented as part of an operating system or a specific application, component, program, object, module or sequence of instructions, or a subset thereof, may be referred to herein as "computer program code," or simply "program code." Program code typically comprises computer-readable instructions that are resident at various times in various memory and storage devices in a computer and that, when read and executed by one or more processors in a computer, cause that computer to perform the operations necessary to execute operations or elements embodying the various aspects of the embodiments of the invention. Computer-readable program instructions for carrying out operations of the embodiments of the invention may be, for example, assembly language, source code, or object code written in any combination of one or more programming languages.

Various program code described herein may be identified based upon the application within which it is implemented in specific embodiments of the invention. However, it should be appreciated that any particular program nomenclature which follows is used merely for convenience, and thus the invention should not be limited to use solely in any specific application identified or implied by such nomenclature. Furthermore, given the generally endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the embodiments of the invention are not limited to the specific organization and allocation of program functionality described herein.

The program code embodied in any of the applications/modules described herein is capable of being individually or collectively distributed as a computer program product in a variety of different forms. In particular, the program code may be distributed using a computer-readable storage medium having computer-readable program instructions thereon for causing a processor to carry out aspects of the embodiments of the invention.

Computer-readable storage media, which is inherently non-transitory, may include volatile and non-volatile, and removable and non-removable tangible media implemented in any method or technology for storage of data, such as computer-readable instructions, data structures, program modules, or other data. Computer-readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store data and which can be read by a computer. A computer-readable storage medium should not be construed as transitory signals per se (e.g., radio waves or other propagating electromagnetic waves, electromagnetic waves propagating through a transmission media such as a waveguide, or electrical signals transmitted through a wire). Computer-readable program instructions may be downloaded to a computer, another type of programmable data processing apparatus, or another device from a computer-readable storage medium or to an external computer or external storage device via a network.

Computer-readable program instructions stored in a computer-readable medium may be used to direct a computer, other types of programmable data processing apparatuses, or other devices to function in a particular manner, such that the instructions stored in the computer-readable medium produce an article of manufacture including instructions that implement the functions, acts, or operations specified in the flowcharts, sequence diagrams, or block diagrams. The computer program instructions may be provided to one or more processors of a general purpose computer, a special purpose computer, or other programmable data processing apparatus to produce a machine, such that the instructions, which execute via the one or more processors, cause a series of computations to be performed to implement the functions, acts, or operations specified in the text of the specification, flowcharts, sequence diagrams, or block diagrams.

The flowcharts and block diagrams depicted in the figures illustrate the architecture, functionality, or operation of possible implementations of systems, methods, or computer program products according to various embodiments of the invention. In this regard, each block in the flowchart or block diagrams may represent a module, segment, or portion of instructions, which comprises one or more executable instructions for implementing the specified logical function or functions.

In certain alternative embodiments, the functions, acts, or operations specified in the flowcharts, sequence diagrams, or block diagrams may be reordered, processed serially, or processed concurrently consistent with embodiments of the invention. Moreover, any of the flowcharts, sequence diagrams, or block diagrams may include more or fewer blocks than those illustrated consistent with embodiments of the invention. It should also be understood that each block of the block diagrams or flowcharts, or any combination of blocks in the block diagrams or flowcharts, may be implemented by a special purpose hardware-based system configured to perform the specified functions or acts, or carried out by a combination of special purpose hardware and computer instructions.

While all the invention has been illustrated by a description of various embodiments, and while these embodiments have been described in considerable detail, it is not the intention of the Applicant to restrict or in any way limit the scope of the appended claims to such detail. Additional advantages and modifications will readily appear to those skilled in the art.

**Claims**

**1.** A rotor (102) for use in a centrifuge (100), comprising:

a rotor body (210) including an axis of rotation; and
a plurality of balancing apertures (432) arranged circumferentially around the axis of rotation, each of the balancing apertures being configured to selectively receive a weight (433, 436),
**characterized in that**, the rotor body further includes a plurality circumferentially spaced tubular cavities (540), each tubular cavity having an open end configured to receive a sample container; and
a lid (102) supported by the rotor body and configured to overlie the open ends of the tubular cavities when the lid is positioned on the rotor body,
wherein the balancing apertures are formed in the lid.

**2.** The rotor of claim 1, wherein the lid includes a top surface and a bottom surface opposite the top surface, and the balancing apertures are formed in one of the top surface or the bottom surface.

**3.** The rotor of any of claims 1 to 2, further comprising:
at least one weight received by at least one of the balancing apertures.

**4.** The rotor of claim 3, wherein the at least one weight is a screw including a threaded outer surface, and each of the balancing apertures includes a threaded inner surface configured to threadedly engage the at least one weight.

**5.** The rotor of any of claims 1 to 4, wherein each balancing aperture is the same radial distance from the axis of rotation as the other balancing apertures.

**6.** The rotor of any of claims 1 to 5, wherein each balancing aperture is spaced the same angular distance from each angularly adjacent balancing aperture.

**7.** The rotor of any of claims 1 to 6, wherein the balancing apertures are coplanar.

**8.** A rotor (1010) for use in a centrifuge (100), comprising:

a rotor body (1012) including an axis of rotation; and
a plurality of balancing apertures (1078) arranged circumferentially around the axis of rotation, each of the balancing apertures being configured to selectively receive a weight (1080),
**characterized in that**,the rotor body further includes an upper surface (1026) and a lower surface (1028) opposite the upper surface, the upper surface including a first annular groove (1042), and further comprising:
a balance ring (1016) positioned in the first annular groove and including a balance ring upper surface (1090), wherein the balancing apertures are formed in the upper surface of the balance ring.

**9.** The rotor of claim 8, wherein the rotor body includes an elongated bore extending along the axis of rotation between the upper surface of the rotor body and the lower surface of the rotor body, and further comprising:

a drive hub (1020) mounted within the elongated bore and including a cylindrical shaft (1120) that projects upwardly through the elongated bore, the cylindrical shaft including an upper portion having a threaded outer surface (1128);
a lid screw (1022) including a lower bore having a threaded inner surface configured to threadedly engage the threaded outer surface of the drive hub, and a lid screw flange that extends radially outward from a lower end of the lid screw;
a lid (1018) including a wall portion extending radially outward and having a lower surface with a third annular groove; and
an elastic member (1102) positioned within the third annular groove that is compressed against the balance ring upper surface in response to threaded engagement of the lid screw with the drive hub.

**10.** The rotor of claim 8 or 9, wherein the first annular groove includes a shoulder, and the balance ring includes a balance ring flange that projects radially inward to engage the shoulder.

**11.** The rotor of any of claims 8 to 10, wherein the rotor body includes a circumferential sidewall (1030), and further comprising a reinforcement (1014) that extends around the circumferential sidewall.

**12.** The rotor of claim 11, wherein the reinforcement extends around and above the circumferential sidewall of the rotor body to define a channel with the first annular groove, and the balance ring is positioned in the channel.

**13.** The rotor of claim 11 or 12, wherein the circumferential sidewall includes a circumferential recess, and the reinforcement conforms to the circumferential recess.

**14.** The rotor of any of claims 8 to 13, wherein the balance ring is operatively coupled to the first annular groove by an adhesive, a shrink-fit, or both the adhesive and the shrink-fit.

**15.** The rotor of any of claims 1 to 14, wherein the rotor body is constructed of a polymer composite, a carbon fiber material, or both the polymer composite and the carbon fiber material.

**Patentansprüche**

**1.** Rotor (102) zur Verwendung in einer Zentrifuge (100), umfassend:

einen Rotorkörper (210), einschließlich einer Rotationsachse; und

eine Vielzahl von Ausbalancierungsöffnungen (432), die um die Rotationsachse herum umlaufend angeordnet ist, wobei jede der Ausbalancierungsöffnungen konfiguriert ist, um ein Gewicht (433, 436) selektiv aufzunehmen, **dadurch gekennzeichnet, dass** der Rotorkörper ferner eine Vielzahl von umlaufend beabstandeten röhrenförmigen Hohlräumen (540) einschließt, wobei jeder röhrenförmige Hohlraum ein offenes Ende aufweist, das konfiguriert ist, um einen Probenbehälter aufzunehmen; und

einen Deckel (102), der durch den Rotorkörper getragen wird und konfiguriert ist, um die offenen Enden der röhrenförmigen Hohlräume zu überlagern, wenn der Deckel auf dem Rotorkörper positioniert ist, wobei die Ausbalancierungsöffnungen in dem Deckel ausgebildet sind.

2. Rotor nach Anspruch 1, wobei der Deckel eine obere Oberfläche und eine untere Oberfläche gegenüber der oberen Oberfläche einschließt und die Ausbalancierungsöffnungen in einer der oberen Oberfläche oder der unteren Oberfläche ausgebildet sind.

3. Rotor nach einem der Ansprüche 1 bis 2, ferner umfassend:
mindestens ein Gewicht, das durch mindestens eine der Ausbalancierungsöffnungen aufgenommen wird.

4. Rotor nach Anspruch 3, wobei das mindestens eine Gewicht eine Schraube einschließlich einer Gewindeaußenoberfläche ist und jede der Ausbalancierungsöffnungen eine Gewindeinnenoberfläche einschließt, die konfiguriert ist, um das mindestens eine Gewicht in Gewindeeingriff zu nehmen.

5. Rotor nach einem der Ansprüche 1 bis 4, wobei sich jede Ausbalancierungsöffnung in der gleichen radialen Distanz von der Rotationsachse wie die anderen Ausbalancierungsöffnungen befindet.

6. Rotor nach einem der Ansprüche 1 bis 5, wobei jede Ausbalancierungsöffnung die gleiche Winkeldistanz von jeder winkelig angrenzenden Ausbalancierungsöffnung beabstandet ist.

7. Rotor nach einem der Ansprüche 1 bis 6, wobei die Ausbalancierungsöffnungen koplanar sind.

8. Rotor (1010) zur Verwendung in einer Zentrifuge (100), umfassend:

einen Rotorkörper (1012), einschließlich einer Rotationsachse; und

eine Vielzahl von Ausbalancierungsöffnungen (1078), die um die Rotationsachse herum umlaufend angeordnet ist, wobei jede der Ausbalancierungsöffnungen konfiguriert ist, um ein Gewicht (1080) selektiv aufzunehmen, **dadurch gekennzeichnet, dass** der Rotorkörper ferner eine obere Oberfläche (1026) und eine untere Oberfläche (1028) gegenüber der oberen Oberfläche einschließt, wobei die obere Oberfläche eine erste ringförmige Nut (1042) einschließt, und ferner umfassend:

einen Ausbalancierungsring (1016), der in der ersten ringförmigen Nut positioniert ist und eine obere Oberfläche (1090) des Ausbalancierungsrings einschließt, wobei die Ausbalancierungsöffnungen in der oberen Oberfläche des Ausbalancierungsrings ausgebildet sind.

9. Rotor nach Anspruch 8, wobei der Rotorkörper eine längliche Bohrung, die sich entlang der Rotationsachse zwischen der oberen Oberfläche des Rotorkörpers und der unteren Oberfläche des Rotorkörpers erstreckt, einschließt, und ferner umfassend:

eine Antriebsnabe (1020), die innerhalb der länglichen Bohrung montiert ist und eine zylindrische Welle (1120), die über die längliche Bohrung nach oben vorsteht, einschließt, wobei die zylindrische Welle einen oberen Abschnitt, der eine Gewindeaußenoberfläche (1128) aufweist, einschließt;

eine Deckelschraube (1022), einschließlich einer unteren Bohrung, die eine Gewindeinnenoberfläche aufweist, die konfiguriert ist, um mit der Gewindeaußenoberfläche der Antriebsnabe in Gewindeeingriff zu kommen, und eines Deckelschraubenflanschs, der sich von einem unteren Ende der Deckelschraube radial nach außen erstreckt;

einen Deckel (1018), einschließlich eines Wandabschnitts, der sich radial nach außen erstreckt und eine untere Oberfläche mit einer dritten ringförmigen Nut aufweist; und

ein elastisches Element (1102), das innerhalb der dritten ringförmigen Nut positioniert ist, das als Reaktion auf einen Gewindeeingriff der Deckelschraube mit der Antriebsnabe gegen die obere Oberfläche des Ausbalancierungsrings gedrückt wird.

**10.** Rotor nach Anspruch 8 oder 9, wobei die erste ringförmige Nut eine Schulter einschließt und der Ausbalancierungsring einen Ausbalancierungsringflansch einschließt, der radial nach innen vorsteht, um die Schulter in Eingriff zu nehmen.

**11.** Rotor nach einem der Ansprüche 8 bis 10, wobei der Rotorkörper eine umlaufende Seitenwand (1030) einschließt, und ferner umfassend eine Verstärkung (1014), die sich um die umlaufende Seitenwand herum erstreckt.

**12.** Rotor nach Anspruch 11, wobei sich die Verstärkung um und oberhalb der umlaufenden Seitenwand des Rotorkörpers erstreckt, um einen Kanal mit der ersten ringförmigen Nut zu definieren, und der Ausbalancierungsring in dem Kanal positioniert ist.

**13.** Rotor nach Anspruch 11 oder 12, wobei die umlaufende Seitenwand eine umlaufende Aussparung einschließt und die Verstärkung der umlaufenden Aussparung entspricht.

**14.** Rotor nach einem der Ansprüche 8 bis 13, wobei der Ausbalancierungsring mit der ersten ringförmigen Nut durch einen Klebstoff, einen Schrumpfsitz oder sowohl den Klebstoff als auch den Schrumpfsitz wirkverbunden ist.

**15.** Rotor nach einem der Ansprüche 1 bis 14, wobei der Rotorkörper aus einem Polymerverbundstoff, einem Kohlefasermaterial oder sowohl dem Polymerverbundstoff als auch dem Kohlefasermaterial konstruiert ist.

## Revendications

**1.** Rotor (102) destiné à être utilisé dans une centrifugeuse (100), comprenant :

un corps de rotor (210) comportant un axe de rotation ; et
une pluralité d'ouvertures d'équilibrage (432) disposées circonférentiellement autour de l'axe de rotation, chacune des ouvertures d'équilibrage étant conçue pour recevoir sélectivement un poids (433, 436),
**caractérisé en ce que,** le corps de rotor comporte en outre une pluralité de cavités tubulaires espacées circonférentiellement (540), chaque cavité tubulaire ayant une extrémité ouverte conçue pour recevoir un récipient d'échantillon ; et
un couvercle (102) supporté par le corps de rotor et conçu pour recouvrir les extrémités ouvertes des cavités tubulaires lorsque le couvercle est positionné sur le corps de rotor,
dans lequel les ouvertures d'équilibrage sont formées dans le couvercle.

**2.** Rotor selon la revendication 1, dans lequel le couvercle comporte une surface supérieure et une surface inférieure opposée à la surface supérieure, et les ouvertures d'équilibrage sont formées dans l'une parmi la surface supérieure ou la surface inférieure.

**3.** Rotor selon l'une quelconque des revendications 1 à 2, comprenant en outre :
au moins un poids reçu par au moins une des ouvertures d'équilibrage.

**4.** Rotor selon la revendication 3, dans lequel l'au moins un poids est une vis comportant une surface externe filetée, et chacune des ouvertures d'équilibrage comporte une surface interne filetée conçue pour venir en prise par filetage avec l'au moins un poids.

**5.** Rotor selon l'une quelconque des revendications 1 à 4, dans lequel chaque ouverture d'équilibrage est à la même distance radiale de l'axe de rotation que les autres ouvertures d'équilibrage.

**6.** Rotor selon l'une quelconque des revendications 1 à 5, dans lequel chaque ouverture d'équilibrage est à la même distance angulaire de chaque ouverture d'équilibrage angulairement adjacente.

**7.** Rotor selon l'une quelconque des revendications 1 à 6, dans lequel les ouvertures d'équilibrage sont coplanaires.

**8.** Rotor (1010) destiné à être utilisé dans une centrifugeuse (100), comprenant :

un corps de rotor (1012) comportant un axe de rotation ; et
une pluralité d'ouvertures d'équilibrage (1078) disposées circonférentiellement autour de l'axe de rotation, chacune des ouvertures d'équilibrage étant conçue pour recevoir sélectivement un poids (1080),

**caractérisé en ce que,** le corps de rotor comporte en outre une surface supérieure (1026) et une surface inférieure (1028) opposée à la surface supérieure, la surface supérieure comportant une première rainure annulaire (1042), et comprenant en outre :

une bague d'équilibrage (1016) positionnée dans la première rainure annulaire et comportant une surface supérieure de bague d'équilibrage (1090), dans laquelle les ouvertures d'équilibrage sont formées dans la surface supérieure de la bague d'équilibrage.

9. Rotor selon la revendication 8, dans lequel le corps de rotor comporte un alésage allongé s'étendant le long de l'axe de rotation entre la surface supérieure du corps de rotor et la surface inférieure du corps de rotor, et comprenant en outre :

un moyeu d'entraînement (1020) monté à l'intérieur de l'alésage allongé et comportant un arbre cylindrique (1120) qui fait saillie vers le haut à travers l'alésage allongé, l'arbre cylindrique comportant une partie supérieure ayant une surface externe filetée (1128) ;
une vis de couvercle (1022) comportant un alésage inférieur ayant une surface interne filetée conçue pour venir en prise par filetage avec la surface externe filetée du moyeu d'entraînement, et une bride de vis de couvercle qui s'étend radialement vers l'extérieur à partir d'une extrémité inférieure de la vis de couvercle ;
un couvercle (1018) comportant une partie de paroi s'étendant radialement vers l'extérieur et ayant une surface inférieure avec une troisième rainure annulaire ; et
un élément élastique (1102) positionné à l'intérieur de la troisième rainure annulaire qui est comprimé contre la surface supérieure de bague d'équilibrage en réponse à une mise en prise filetée de la vis de couvercle avec le moyeu d'entraînement.

10. Rotor selon la revendication 8 ou 9, dans lequel la première rainure annulaire comporte un épaulement, et la bague d'équilibrage comporte une bride de bague d'équilibrage qui fait saillie radialement vers l'intérieur pour venir en prise avec l'épaulement.

11. Rotor selon l'une quelconque des revendications 8 à 10, dans lequel le corps de rotor comporte une paroi latérale circonférentielle (1030), et comprenant en outre un renfort (1014) qui s'étend autour de la paroi latérale circonférentielle.

12. Rotor selon la revendication 11, dans lequel le renfort s'étend autour et au-dessus de la paroi latérale circonférentielle du corps de rotor pour définir un canal avec la première rainure annulaire, et la bague d'équilibrage est positionnée dans le canal.

13. Rotor selon la revendication 11 ou 12, dans lequel la paroi latérale circonférentielle comporte un renfoncement circonférentiel, et le renfort se conforme au renfoncement circonférentiel.

14. Rotor selon l'une quelconque des revendications 8 à 13, dans lequel la bague d'équilibrage est accouplée de manière fonctionnelle à la première rainure annulaire par un adhésif, un ajustement par frettage ou à la fois l'adhésif et l'ajustement par frettage.

15. Rotor selon l'une quelconque des revendications 1 à 14, dans lequel le corps de rotor est constitué d'un composite polymère, d'un matériau en fibre de carbone ou à la fois du composite polymère et du matériau en fibre de carbone.

**FIG. 1**

FIG. 3

26

FIG. 4

**FIG. 4A**

**FIG. 4B**

**FIG. 4C**

**FIG. 4D**

FIG. 5

**FIG. 6**

212

426

434    551

433

432

430

424    429    428

**FIG. 7**

**FIG. 8**

FIG. 9

*946*

DETERMINE CRITICAL MODES
OF ROTOR SYSTEM *947*

*948*

APPLY EXTERNAL FORCE TO
MOTOR IN PRE-DEFINED
FREQUENCY BAND

*950*

MEASURE VIBRATION RESPONSE
AT BEARING SUPPORTING THE
ROTATING SHAFT AT A CHOSEN
FREQUENCY

*952*

PLOT MEASURED VIBRATION
RESPONSE FUNCTION OF SHAFT'S
ROTATIONAL SPEED (RPM) AND
FREQUENCY OF THE APPLIED
FORCE (Hz) (CAMPBELL DIAGRAM)

*954*

FROM THE PEAKS OF THE
CAMPBELL DIAGRAM, IDENTIFY
THE CRITICAL ROTATIONAL
FREQUENCIES (RPM) AT WHICH
THE VIBRATION OF THE BEARINGS
IS MOST SEVERE
(I.E. CRITICAL MODES)

# FIG. 9A

958

963

**CORRECT IMBALANCE AT FRACTION OF CRITICAL MODE**

960 — SPIN ROTOR AT FRACTION OF CRITICAL MODE RPM

962 — MEASURE AND RECORD THE IMBALANCE

964 — INSTALL TRIAL WEIGHT OF KNOWN MASS AT REFERENCE LOCATION ON THE ROTOR LID

966 — SPIN ROTOR AT FRACTION OF CRITICAL MODE RPM

968 — MEASURE AND RECORD THE IMBALANCE

970 — MOVE TRIAL WEIGHT OF KNOWN MASS TO A LOCATION 120° FROM PREVIOUS LOCATION ON LID

972 — SPIN ROTOR AT FRACTION OF CRITICAL MODE RPM

974 — MEASURE AND RECORD THE IMBALANCE

976 — SOLVE SYSTEM OF EQUATIONS TO DETERMINE WHERE CORRECTION MASS NEEDS TO BE LOCATED

978 — INSTALL CORRECTION MASS AT SPECIFIED LOCATION

980 — TEST BALANCING FOR FACTORY RESULT

**FIG. 9B**

*990*

EVALUATE BALANCING AT TARGET RPM

*991*

*992*

SPIN ROTOR AT TARGET RPM

*994*

MEASURE AND RECORD THE IMBALANCE

*996*

COMPARE RECORDED IMBALANCE FOR TARGET RPM TO THE RECORDED IMBALANCE FOR THE FIRST CRITICAL MODE AFTER BALANCING

*998*

DETERMINE IF LEVEL OF BALANCING IS ADEQUATE

## FIG. 9C

FIG. 10

FIG. 11

FIG. 12

FIG. 13

**FIG. 14**

**FIG. 15**

FIG. 16

**FIG. 17**

**FIG. 18**

FIG. 19

FIG. 20

FIG. 21

EP 4 100 167 B1

**FIG. 22**

**FIG. 23**

**FIG. 24**

*1200*

COMPUTING DEVICE

*1204*

MEMORY

*1214*

OPERATING SYSTEM

*1216*

APPLICATION

*1218*

DATA STRUCTURE

*1220*

DATABASE

*1208*

HMI

*1202*

PROCESSOR

*1206*

IO INTERFACE

*1210*

RESOURCE

*1212*

NETWORK

## FIG. 25

**REFERENCES CITED IN THE DESCRIPTION**

**Patent documents cited in the description**

- US 8147392 B
- US 8273202 B
- US 8323169 B
- US 10086387 B
- US 2020001505 A1
- US 989043 A